# EUROPEAN PATENT SPECIFICATION

(11) **EP 4 558 403 B1**
(45) Date of publication and mention of the grant of the patent: **01.07.2026**
(21) Application number: 23744890.7
(22) Date of filing: 18.07.2023
(51) Int. Cl.: B64D 35/00, B64C 11/48, B64U 10/13, B64C 27/12, B64U 30/24, B64D 27/24

(54) **MOVING PLATFORM FOR TRANSPORTING THINGS**
BEWEGLICHE PLATTFORM ZUM TRANSPORTIEREN VON DINGEN
PLATEFORME MOBILE POUR LE TRANSPORT D'OBJETS

(30) Priority: 18.07.2022 US 202263368719 P
(43) Date of publication of application: 28.05.2025
(73) Proprietor: SKYWORKER TECHNOLOGIES LTD., 7040141 Gedera (IL)
(72) Inventor: VOROVITCHIK, Shlomo, 7079500 Kidron (IL)
(74) Representative: Plasseraud IP
(86) International application number: PCT/IL2023/050748
(87) International publication number: WO 2024/018459

(56) References cited:
- EP-A1- 3 450 312
- EP-A2- 2 228 301
- WO-A1-2016/068767

## Description

### TECHNOLOGICAL FIELD

The present dislcosure is in the field of moving platforms fortransforming things, in particular useful in autonomous robotic applications.

### GENERAL DESCRIPTION

A moving platform, vehicle, robot and/or any other device with a structure, piece of mechanized equipment for transporting payload, persons or thing has a mission which constrained by its power and energy densities. It has long been a goal of autonomous robotic or moving platforms to operate fast, accurate and cheaply. A high-power density hardware is needed as autonomous robotic applications and robotics missions are advancing. The apparatus and methods described here allows autonomous applications to accelerate faster and accurately in all 6 Degrees of Freedom (DOF) in space. Similar, high energy density hardware, energy storage, batteries and/or fuel containers allow autonomous moving platform to operate for longer period and complete their mission faster and precisely.

Today, the selection of the energy storage, motor(s) and/or engine(s) on a moving platform is a design process done according to the moving platform application and according to the moving platform mission. Hence, in most cases the moving platform subsystems, such as powertrain, drivetrain, transmission and powerplants determine the total power density and energy density of a moving platform. EP3450312A1 discloses a multi-rotor aerial vehicle comprising least two rotors, a controller, a power supply having an output shaft, a shaft-driven hydraulic machine coupled to the output shaft and at least two rotor-driving hydraulic machines coupled to respective rotors. At least one of the hydraulic machines is an electronically commutated hydraulic machine in which the displacement of hydraulic fluid through each working chamber is regulated by one or more electronically controllable valves, during each cycle of working chamber volume, in phased relationship to cycles of working chamber volume. The controller controls the one or more electronically controllable valves of each of the electronically commutated hydraulic machines to independently control the rotation of the rotors.

The present disclosure presents here an apparatus, a moving platform and methods that include a fluid drive subsystem, part of the powertrain, drivetrain and transmission subsystem connected to a powerplant unit. Together, the fluid drive subsystem and the powerplant unit provide a new breed of moving platform, with improved power density and energy densities that are most suitable to an autonomous robotic moving platform.

In addition, Ariel and Aerospace moving platforms for example, such as Vertical Take-Off and Landing (VTOL) vehicles, may benefit from the technique of the present disclosure allowing additional physical and aerodynamics capabilities such as unique Disc Loading vs moving platform weight, low Polar moment of Inertia of the thrusting system, fixable and sized changing powertrain, flexible and adaptable structure of the moving platform. And partially airborne moving platform combined with different power source and/or powerplant. This allows high- specific power and specific energy for different class, sized, shape of an aerodynamic vehicles concepts of VTOL moving platforms.

Therefore, an aspect of the present disclosure provides a thrusting assembly for mounting on an aerial platform and configured for generating thrusting power to allow a controllable accelerated air mass flow in and out the thrusting assembly. The thrusting assembly comprises one or more fluid-based rotary actuators, or motors, in fluid communication with a source of energized / pressurized working fluid for receiving energized working fluid to thereby driving the one or more fluid-based rotary actuators. The thrusting assembly further comprises one or more actuator disc arrangements, each comprising a plurality of blades, rotatable by said one or more fluid-based rotary actuators. A valving mechanism of the thrusting assembly is disposed along a flow path between the source of energized working fluid and the one or more fluid-based rotary actuators. The thrusting assembly further comprises at least one processing circuitry; one or more memories coupled to the at least one processing circuitry and storing programming instructions for execution by the at least one processing circuitry to: (1) control said valving mechanism to result in at least one of: (i) selected flow rate, (ii) selected fluid pressure, and (iii) selected temperature of said energized working fluid in said one or more fluid-based rotary actuators or being received in said one or more fluid-based rotary actuators. This configuration of the thrusting assembly enables controlling of the instant angular acceleration and the rotational speed of the motor and therefore the rotational motion of the actuator disc arrangements.

In some embodiments of the thrusting assembly, the plurality of blades are coupled to the respective rotor by a hinge. An angle of attack of the plurality of blades is defined by forces acting on the hinge. Namely, the hinge is a passive hinge and the blade is pivotable about the hinge in response to the forces acting on the hinge, such as the instant torque and centrifugal forces.

The processing circuitry is configured to control said valving mechanism to result in a selected rotational profile of said one or more actuator disc arrangements. Said selected rotational profile comprises a varying angular acceleration in a single rotation or in a selected number of rotations while maintaining a selected RPM (revolution per minute) in said single rotation, namely, in part of the rotation, the blades are accelerating and in part of the rotation, the blade are decelerating such that the total time of the single rotation is according to the given and desired RPM, or in said selected number of rotations, namely, in part of the rotation within said selected number of rotations the blades are accelerating and in part of the rotation, the blade are decelerating such that the total time of the selected number of rotations is according to the given and desired RPM.

In some embodiments of the thrusting assembly, said processing circuitry is configured to control said source of energized working fluid, directly or indirectly, to affect the fluid pressure being output therefrom towards the fluid-based rotary actuators.

In some embodiments of the thrusting assembly, said energized working fluid is liquid, i.e. hydraulic liquids, and said one or more fluid-based rotary actuators is/are hydraulic motor(s).

In some embodiments of the thrusting assembly, said liquid flows in a closed-loop flow with one or more low and high pressure loops.

In some embodiments of the thrusting assembly, said energized working fluid is gas and said one or more fluid-based rotary actuators is/are pneumatic motor(s) and/or heat-pump rotary expander(s).

In some embodiments of the thrusting assembly, said gas is air and said one or more fluid-based rotary actuators operate based on an open-loop flow of said gas. Namely, air that participated in the operation of the motor is released back to the surroundings and new air is suctioned to the motor to be compressed.

In some embodiments of the thrusting assembly, each of said one or more actuator disc arrangements comprises a rotor shaft coupled to said one or more fluid-based rotary actuators for allowing rotation of the respective fluid-based rotary actuator. The thrusting assembly further comprises a rotor shaft angular position sensor configured for sensing the angular position of the rotor shaft and generate rotor angular position data based thereon. Said processing circuitry is configured to allow controlling of the rotor shaft rotation profile, and therefore the fluid-based rotary actuator rotation profile, based on the fluid-based rotary actuator angular position data and to selectively control the rotation velocity at each angular position according to a desired rotation profile.

In some embodiments of the thrusting assembly, said processing circuitry is configured to control the rotational acceleration of said blades and the angle of attack of each blade.

In some embodiments of the thrusting assembly, the processing circuitry is configured to control the angle of attack of each blade independently based upon the time domain and/or based upon the instant angular position of the actuator disc.

In some embodiments, the thrusting assembly further comprises a tilt sensor for sensing the tilt of the aerial platform (vehicle) carrying the thrusting assembly and generate tilt data based thereon, wherein said processing circuitry is configured to control said valving mechanism based on said tilt data.

In some embodiments of the thrusting assembly, said processing circuitry is configured to control said valving mechanism by a pulse-width modulation technique. Namely, the electronics operating the valves receive pulses in a rate that is faster than it takes the load to change significantly.

In some embodiments of the thrusting assembly, said processing circuitry is configured to control the valving mechanism to allow a controlled maneuvering of the aerial platform (vehicle) carrying the thrusting assembly in at least six degrees of freedom.

In some embodiments of the thrusting assembly, said source of energized fluid comprises at least two sub-sources of energized working fluid, each being configured to provide an energized working fluid in a different pressure to allow feed of the one or more fluid-based rotary actuators with a range of pressures of the fluid.

In some embodiments of the thrusting assembly, said source of energized working fluid comprises one or more liquid pumps.

In some embodiments of the thrusting assembly, said source of energized working fluid comprises one or more compressors.

In some embodiments, the thrusting assembly further comprises a cooling arrangement in fluid communication with said source of energized working fluid for cooling the energized working fluid.

In some embodiments, the thrusting assembly further comprises a power source for powering said source of energized working fluid. The power source can be a battery or a generator based on consumption of non-renewable materials, such as fuels.

In some embodiments, the thrusting assembly further comprises said source of energized working fluid. It is to be noted that energized fluid refers to fluid characterized by any pressure above ambient pressure and/or chemically reactive.

In some embodiments of the thrusting assembly, said processing circuitry is configured to control said valving mechanism to control the angular position, velocity and acceleration of the one or more fluid-based rotary actuators, or at least a shaft rotatable by the one or more fluid-based rotary actuators, to thereby control mechanical motion of the one or more actuator disc arrangements, which in turn generates thrusting powers and acceleration of air mass flow across the thrusting assembly.

In some embodiments of the thrusting assembly, each of said one or more fluid-based rotary actuators comprises a rotatable motor shaft coupled to a respective actuator disc arrangement of said one or more actuator disc arrangements for allowing rotation of the respective rotor. The thrusting assembly further comprises a motor shaft angular position sensor configured for sensing the angular position of the motor shaft and generating motor angular position data based thereon. The processing circuitry is configured to allow controlling of the motor shaft rotation profile, and therefore the motor and the rotor rotation profile, based on the motor angular position data and to selectively control the rotation velocity at each angular position according to a desired rotation profile.

In some embodiments of the thrusting assembly, said one or more fluid-based rotary actuators is/are operable to result in air mass flow through the thrusting assembly in two opposite directions. Namely, air may flow from the top of the thrusting assembly downwards and from the bottom of the thrusting assembly upwards. In other words, the air mass flow can change direction within the thruster assembly as some mass air flow may enter the thruster inlet and in some cases the mass air may exit via the thruster inlet.

In some embodiments of the thrusting assembly, said processing circuitry is configured to control said valving mechanism to controllably result said air mass flow through the thrusting assembly in two opposite directions according to desired maneuver of the aerial platform.

In some embodiments, the thrusting assembly further comprises a combustion component configured to heat air mass flow that flows from the one or more actuator disc arrangements to thereby further accelerate the air mass flow. The combustion component allows to obtain a hypersonic flow of the air mass flow through the thrusting assembly. The combustion component is arranged downstream the actuator disc arrangements with respect to the air flow path through the thrusting assembly.

In some embodiments of the thrusting assembly, said combustion component comprises a nozzle, wherein the air mass flow is heated to thereby accelerate within said nozzle, e.g. to hypersonic velocities.

In some embodiments of the thrusting assembly, said one or more actuator disc arrangements are configured to allow hypersonic flow rate of air mass therethrough.

In some embodiments of the thrusting assembly, said one or more fluid-based rotary actuators are operable to obtain said hypersonic flow.

In some embodiments of the thrusting assembly, said aerial platform is an autonomous aerial platform or aerial vehicle.

In some embodiments of the thrusting assembly, propulsive force of the thrusting assembly comprises a disc loading profile controlled by at least one characterization of said one or more actuator disc arrangements: an instant torque, instant angular torque, alternate instant angular torque, instant rotational speed, global rotational speed, or any combination thereof.

In some embodiments of the thrusting assembly, the thrusting assembly is configured to generate autorotation energy in response to autorotation of the one or more fluid-based rotary actuators, namely passive rotation of the blades, e.g. while the aerial platform is descending.

In some embodiments of the thrusting assembly, said autorotation energy is either being directly used to drive said one or more fluid-based rotary actuators or stored in an energy storage of the thrusting assembly for later use.

In some embodiments of the thrusting assembly, said one or more actuator disc arrangements comprise one or more tandem actuator disc arrangements, each has a pair of coaxial actuator disc arrangements members.

In some embodiments, the thrusting assembly comprises an odd number of said one or more tandem actuator disc arrangements.

In some embodiments of the thrusting assembly, each member of the pair of coaxial actuator disc arrangements is configured to rotate in an opposite direction to the other member.

In some embodiments, the thrusting assembly comprises one or more powerplant units. The powerplant may be an integral part of the aerial platform in other the embodiments powerplant external to the moving platform and may be grounded or part of another vehicle or a fixed structure.

Yet another aspect of the present disclosure provides an aerial platform or aerial vehicle. The aerial platform comprises the thrusting assembly of any of the above-described embodiments or any combination thereof. The aerial platform further comprises a platform mission and application utility configured to operate a desired operation while the aerial platform is airborne.

In some embodiments of the aerial platform, the platform mission and application utility is driven by the energized working fluid supplied from the source of energized working fluid. The platform mission and application utility may carry out any robotic application, such as collecting fruits, drilling, etc.

### BRIEF DESCRIPTION OF THE DRAWINGS

In order to better understand the subject matter that is disclosed herein and to exemplify how it may be carried out in practice, embodiments will now be described, by way of non-limiting examples only, with reference to the accompanying drawings, in which:
**Figs. 1A** **and** **1B** are block diagrams exemplifying different non-limiting embodiments of the thrusting assembly of the present disclosure.
**Fig. 2** is a schematic illustration of a non-limiting example of a thrusting assembly according to an aspect of the present disclosure.
**Fig. 3** is a schematic illustration of a non-limiting example of a thrusting assembly according to an aspect of the present disclosure.
**Fig. 4** is a schematic illustration of a non-limiting example of an operation scheme of the valving mechanism of the thrusting assembly of the present disclosure.
**Figs. 5A-5B** are schematic illustrations exemplifying a non-limiting embodiment of a thrusting assembly according to an aspect of the present disclosure.
**Figs. 6A-6B** are schematic illustrations exemplifying different non-limiting realizations of a thrusting assembly according to an aspect of the present disclosure.

### DETAILED DESCRIPTION OF EMBODIMENTS

The technique of the present disclosure provides a novel approach for construction and operation of a moving platform for transporting various things. This technique provides a Fluid Powered Thrust Vectoring Systems (FTVU) that can be attached to / mounted on a moving platform (e.g., robot).

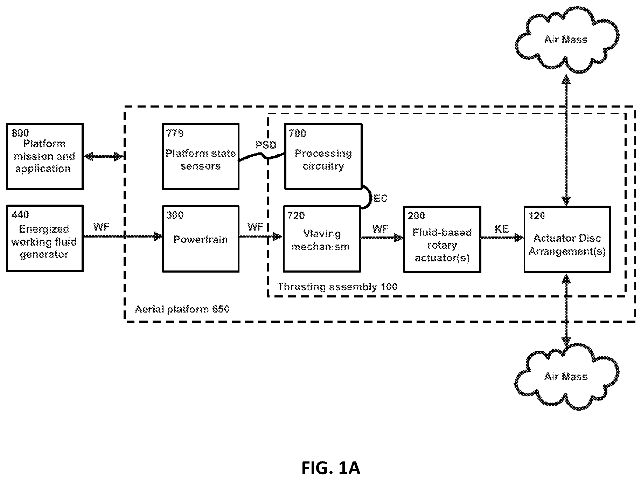

Reference is made to **Figs. 1A-1B****,** which are block diagrams of non-limiting examples of a thrusting assembly **100** configured and operable according to the present disclosure. The thrusting assembly is mounted on an aerial platform **650.**

**Fig. 1A** shows a thrusting assembly **100** that comprises one or more fluid-based rotary actuators **200** that are driven by Working Fluid **(WF)** supplied from a source of energized working fluid **440** either mounted on the aerial platform **650** or mounted on an auxiliary land vehicle that is connected to the aerial platform **650.** The working fluid **WF,** which may be liquid for hydraulic realization or gas for pneumatic realization of the fluid-based rotary actuators **200,** is delivered to a power train **300** that is configured, in turn, to controllably supply the working fluid **WF** to the fluid-based rotary actuators **200** by controllable valving mechanism **720** that is controlled by a processing circuitry **700** (at times referred to below as a computer system or control system). The processing circuitry **700** is configured to control the valving mechanism **720** by Execution Commands **(EC)** that are transmitted to the valving mechanism **720** and causing the valves in the valving mechanism **720** to open and close, thereby allowing controllable flow rate of energized working fluid **WF** to flow towards the fluid-based rotary actuators **200.**

The processing circuitry is in data communication with a plurality of platform state sensors **779** that are configured to sense the aerial platform state of the aerial platform and generate Platform State Data **(PSD)** and to transmit it to the processing circuitry **700.** The platform state data **PSD** may include any one of the following: position data of the platform, e.g. the tilt of the platform, the air velocity of the platform, the ground velocity of the platform, the pitch, roll and yaw of the platform, the angular position of each of the fluid-based rotary actuators, the angular position of each of the actuator disc arrangements or any combination thereof. Based on the platform state data **PSD,** the processing circuitry **700** is configured to accordingly generate the execution commands **EC** to result in the desired torque and rotational velocity of the fluid-based rotary actuators **200** to achieve a desired flying pattern or profile. The execution commands **EC** can be in the form of Pulse-width modulation (PWM), or pulse-duration modulation (PDM) techniques.

The fluid-based rotary actuators **200** are coupled to one or more actuator disc arrangements **120** that are rotatable by kinetic energy **KE** delivered to them by the fluid-based rotary actuators **602.** In result to the rotation of the actuator disc arrangements **120,** air mass flows through them and causes an acceleration of the aerial platform or desired maneuver thereof.

It is to be noted that in some embodiments, the platform state sensors **779,** or at least some of them, can be part of the thrusting assembly **100.** Furthermore, in some embodiments, the source of energized working fluid **440** can be part of the thrusting assembly **100.**

The power train **300** should be broadly interpreted as a delivery tool for delivering the energized working fluid, which can be a duct, for example or an array of ducts. The energized working fluid can be generated by an energized working fluid generator **440** which may not even be mounted on the aerial platform **650.** For example, the aerial platform **650** can be coupled to a land-based vehicle that comprises said energized working fluid generator **440** and deliver it to the source of energized working fluid **440** on the aerial platform **650.** Though, in some embodiments, the energized working fluid generator **440** can be on the aerial platform **650** itself. The energized working fluid generator **440** may be a pump or an array of pumps that are configured to elevate the pressure of the working fluid **WF,** e.g. a working liquid, and to deliver it in a suitable flow rate to the power train **300.**

The aerial platform **650** may be couplable with or integral with a platform mission and application utility **800** that is capable of performing a selected operation, such as drilling, cutting branches, collecting fruits, or any other desired application. This platform mission and application utility **800** is configured to be powered by the working fluid **WF** that is supplied to the aerial platform **650** and the thrusting assembly **100** by the energized working fluid generator **440.** Furthermore, the control of the power supply and optionally the control of the operation itself may be performed by the processing circuitry **700** of the thrusting assembly **100.**

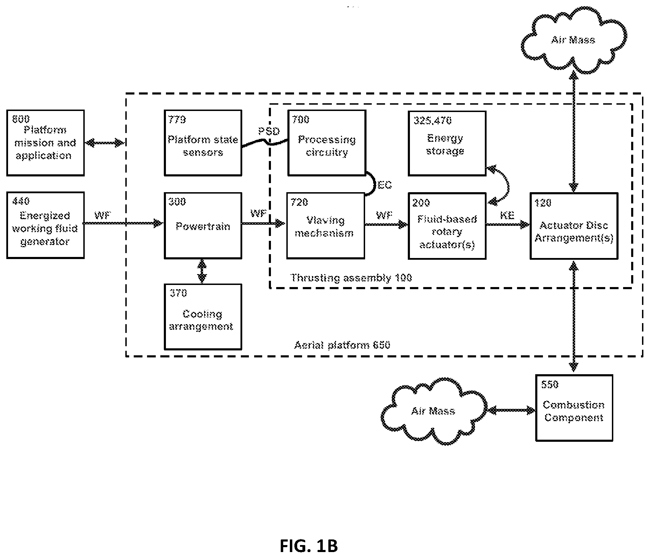

Reference is now being made to **Fig. 1B****,** which differs from **Fig. 1A** by including a cooling arrangement **370,** a fluid energy storage **325** and a combustion component **550.** The cooling arrangement **370** is configured to receive a portion of the working fluid **WF,** cool it and return it back to further use in the thrusting assembly **100.** This is required due to the heating of the working fluid **WF** while it operates in the thrusting assembly **100.**

The fluid energy storage **325** is configured to store energy **EN** and deliver it when it is required. The energy storage **325** is used to store energy **EN** that is generated due to autorotation of the actuator disc arrangements **120,** e.g. while the aerial platform **650** descends, therefore its potential energy is transformed into Kinetic Energy (KE) and the fluid-based rotary actuators **200** are configured to serve also as electric generators when driven by the actuator disc arrangements **120** and the energy **EN** they produce is delivered to be stored in the electrical energy storage **470.**

The combustion component **550** is arranged such that it is configured to receive the air mass flow that is moved by the actuator disc arrangements **120,** namely the combustion component **550** is downstream the actuator disc arrangements **120** along the air mass flow path. The combustion component **550** is configured to heat the air mass that is received therein to accelerate it through a nozzle (not shown) that is part of the combustion component, thereby allowing accelerating the air mass to hypersonic speed.

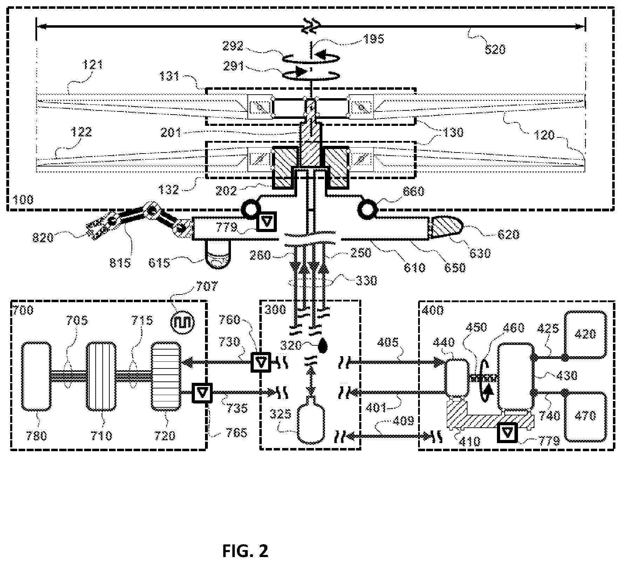

Various specific but not limiting examples of the configuration and operation of the thrusting assembly / system of the present disclosure are described below with reference to **Figs. 2-4****, 5A-5B, and 6A-6B.**

It is to be noted that if the disclosure refers to a specific figure and an element does not appear in the figure, the teaching of such an elements should be done from a figure it appears on.

In some embodiments of the technique/system of the present disclosure the FTVU **100** is driven by a fluid powertrain, fluid drivetrain and/or fluid transmission subsystem **300** that may include, but not limited to be a part of an autonomous robotic moving platform **650** or any vehicle to move, maneuver, hover, fly and be subject to thrust force and/or be projectile. The configuration and operation of the FTVU **100** described herein allows autonomous robotics applications or any moving platform **650** to accelerate faster and accurately in all 6 degrees of freedom (6DOF) in space. Six degrees of freedom (6DOF) refers to the freedom of movement of a rigid body in a three-dimensional space.

Thus, according to a broad aspect of the present invention, it provides one or more FTVUs **100** configured to be attached to / mounted on a single moving platform and/or a robot **650.** Whereas a single moving platform **650** may carry a combination of different types of thrust vectoring systems. For example, a single moving platform **650** may have one or more FTVUs **100** combined with another type of thrust vectoring system. Hence, a single moving platform **650** according to some embodiments of the present disclosure may be further associated with a combination of different types of thrust vectoring systems such as FTVU **100,** an Gas Dynamic Steering (GDS), Gas Dynamic Control (GDC), an Electrical powered Thrust Vectoring System (ETVS) **801,** a Shaft cupelled Thrust Vectoring System (STVS) with a fueled engine, Propellant Injection vectoring System (PIVS), Vernier Thruster System (VTS) and/or any thrust vector of a rocket nozzle.

A single moving platform **650** may include but not limited to missile, rocket, low orbit satellite, aerospace moving platform/carrier, aerial moving platform, aircraft and/or any type of a flying machine and/or a vehicle. The moving platform **650** with the attached FTVU **100** introduced here may travel through atmospheric air on and around the planet earth, and/or on any planet within the solar system and/or in space between planets.

In some embodiments, as illustrated in **FIG.2****,** the FTVU **100** has an Actuator Disc **120** configuration of coaxial/coax rotors and/or tandem rotors and/or Intermeshing rotors resulting in disc loading **500** with radial area of **520.** The two coaxial/coax rotors, **121,122** may rotate in the opposite directions **291, 292** on a rotational axis **195** of the fluid powered thrust vectoring unit (FTVU) **100.** The FTVU **100** in the example shown in **FIG.2** includes two fluid actuators **200,** each connected to a teetering hinge rotor / blade system **120.** As illustrated in **FIG.2****,** the fluid actuator **201** is coupled mechanically **130** with the rotor **121** by a passive teetering hinge mechanism **131.** Similarly, a hollow shaft fluid actuator **202** is coupled with a mechanical hub **132** to the passive rotor system **122.**

In some other embodiment, as illustrated in **FIG.2****,** the fluid powered thrust vectoring unit (FTVU) **100** is attached to the moving platform **650** by a mechanical joint **660.** The moving platform in **FIG.2** has payload **615** and wings and control surfaces **620.** Alternatively, in configurations as illustrated schematically in **FIG.2****,** a computer system **700** and/or a drivetrain / powertrain **300** and/or a powerplant **400** may be part of the thrust vectoring units (FTVU) **100** and/or part of the moving platform **650** and/or part of the payload **615** and/or part of vectoring units (FTVU) **100** main application **815** and/or the main application **815** payload and remote job **820.**

Thus, according to the present disclosure, the thrust vectoring unit (FTVU) **100** may be powered by unknown powerplant **400** whereas the powertrain **300** acts as a network of piping **330** and/or fluid lines **401,409, 325, 730, 735, 250, 260** and/or internal parts and accessories of such devices as fluid actuator **200,** fluid transmission subsystem **130,** fluid pump **440** and fluid valving device **720.** In other cases, where there is no powerplant **400** connected, the FTVU **100** may be powered only by a pressurized tank **325** or accumulator **325** part of the powertrain **300** network of fluid lines. In other cases, where the powerplant **400** is connected with the powertrain **300,** as shown in **FIG.2****,** the accumulator **325** configuration, part of the powertrain **300** may power and regulate one or more fluid actuators **200** part of the FTVU **100,** while connected in a parallel manner and/or in a serial manner and/or directly and/or indirectly with the powerplant **400** fluid lines **401,405** and **409.**

Referring again to the non-limiting example illustrated in **FIG.2****,** the computer system **700** may be part of FTVU **100** and/or of the moving platform **650** and/or part of the payload **615** and/or part of the main application **815, 820.** The computer system **700** has a fluid valving device **720** that is connected to a powered electronics board **710** managed by a real-time software **780.** The software **780** operates on the computer system **700,** sends and receives signals, being digital, optical, analogue and/or Radio frequency (RF) signals, via embedded cables **705** and/or via connections **705** and/or via wireless link **705** from and to the powered electronics board **710.**

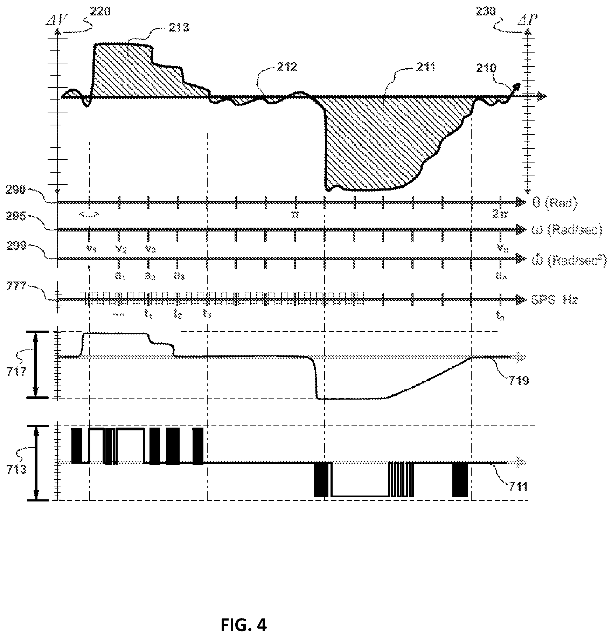

In some embodiments and as illustrated schematically in **FIG.4****,** the powered electronics board **710** translates and computes the signals, data and information received from the software **780** into powered electrical signals **711,719** in one or more different methods and configurations of control system **717** and **713** as shown in **FIG.4****.** These examples of powered electrical signals **711,719** are applied in Watts per second, voltage per second and/or ampere per second on the electro-mechanical valving device **720.**

Referring again to the non-limiting embodiment illustrated in **FIG.2****,** these powered electrical singles **711,719** generated by the power electronics board **710** are transferred via the connections **715** and applied on the electro-mechanical valving device **720.** The valving device **720** converts the electrical power and/or the signals **711,719** in Watts per second received from the power electronics board **710** into mechanical energy that acts as a valve mechanism on the working fluid **320** entering the valving device **720.** The working fluid **320** enters the device **720** via an inlet port **730** and an outlet port **735** from the powertrain **300** network of pipes **330.**

In some embodiments, not specifically shown in **FIG.2****,** the valving device / mechanism **720** may operate within the fluid actuator **200** itself, within the hub mechanism **130,** within the powertrain **300** accessories and/or within the powerplant **400** components. Alternatively, as illustrated schematically in **FIG.2****,** the computer system **700** may be an embedded part of FTVU **100** and/or may be configured as a modular part of the moving platform **650** and/or the moving platform application **815.**

Additionally, or alternatively, the fluid entering via line **730** into the valving device **720** is measured by a fluid sensor **760** of the computer system **700.** Similar, the working fluid **320** leaving the valving device **720** via the fluid line **735** is measured in real-time by a fluid sensor **765.** These fluid sensors **760** and **765,** part of the computer system **700,** are configured for measuring the performances of the valving device **720** and/or the working fluid **320** properties such as: temperature, pressure, volume rate and/or physical status before and after entering and leaving the electro-mechanical valving actuator mechanism **720.**

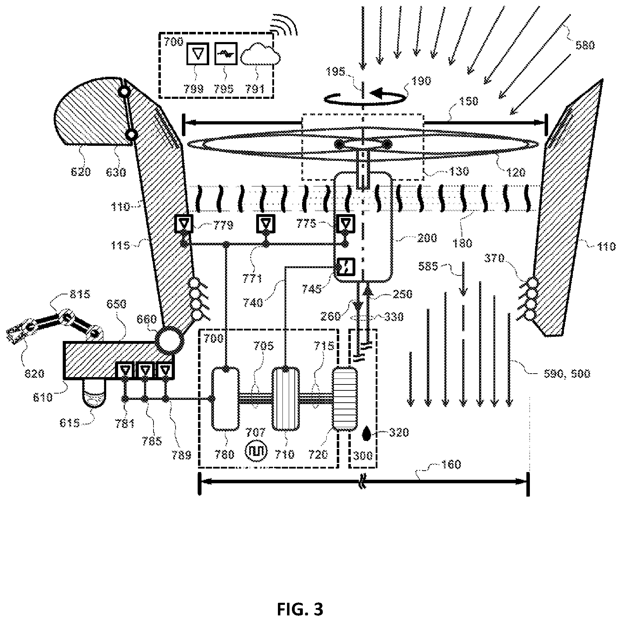

In another embodiment, illustrated in **FIG.3****,** the electro-mechanical fluid valving device **720** may be connected directly with inlet port **250** of the fluid rotary actuator **200,** being part of the powertrain **300** configuration. In other cases, as shown in **FIG.4****,** this valving device **720** may drive the fluid rotary actuators **200** with a Pulse-width modulation (PWM), or pulse-duration modulation (PDM) manner, where fast, real-time modulation in volume **220** and/or pressure **230** takes place.

Thus, according to the present disclosure and as exemplified in **FIG.2****,** the fluid actuators **201, 202** within the FTVU **100** may be feed via the intake port **250** and/or restricted via the outlet port **260** and/or directly connected to the powertrain **300** fluid lines **730,735,405,401,409, 730, 735** and/or **325.**

As further shown in **FIG.2****,** the powerplant **400** may have one or more energy containers storage **420** or fuel tank(s) **420.** This fuel tank **420** is connected by piping hardware **425** and/or a fuel feeder machinery **425** to an engine **430** that converts the chemical energy of the fuel in the storage **420** in thermodynamically manner by doing combustion and/or mixing one or more types of fuels and gases into useful mechanical energy **460.** In some embodiments of the powerplant **400** configuration, an electrical utility power socket **470** and/or fuel cell **470** and/or battery **470** and/or any type of chemical energy storage of electrons and electrical power **470,** may provide the electrical motor **430** with electrical power. In some embodiments, the electrical motor **430** converts the electrical energy received from the battery **470** via the grid cables **740** into useful mechanical energy **460.**

Hence, the useful mechanical energy **460** generated by engine **430** and/or motor **430** is then transferred into the fluid pump **440** by a mechanical coupler **450.** The useful mechanical energy **460** derived by the mechanical coupler **450** is applied on the pumping mechanism **440.** As a result, the pumping mechanism **440** energizes the fluid that enters the pump **440** from the powertrain **300** via the inlet line **405** and leaves the pump via the outlet fluid line **401.** Similar, the pumping mechanism **440** may create a pressure difference and/or a volume movement between the fluid entering the pump **440** via the inlet line **405** and the energized fluid leaving the pump via the outlet fluid line **401.**

Thus, according to the present disclosure, the powertrain **300** may accommodate different types of working fluid **320,** such as air and/or oil and/or any type of liquids and gases. Additionally, or alternatively, the powertrain **300** may be configured as an open loop system and/or closed loop system with one and more layers of network of piping **330.** In some cases, the additional layers of piping **330** and accessories, part of the powertrain **300** subsystem, may serve purposes of cooling **370** by heat pump fluids and/or by the working fluid itself **320.** Similar, the powertrain **300** may include lubrication setup, additional piloting lines form actuators **200** and pumps **440** and/or the powertrain **300** may include high, medium, low and negative pressurized fluid lines.

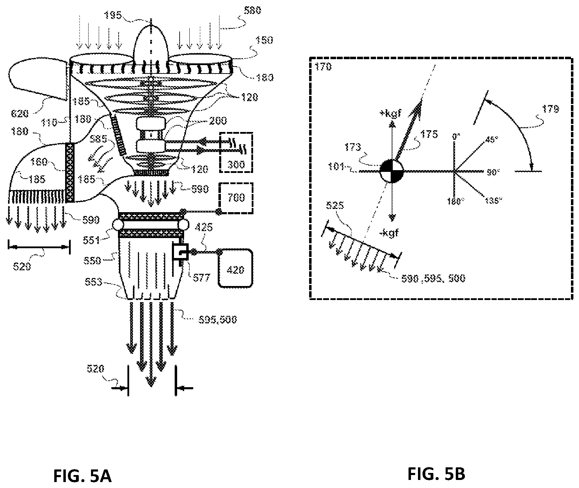

According to the present disclosure, as illustrated in **FIG. 5A****,** an afterburner nozzle configuration **500** is used by arranging a nozzle afterburner setup **550** on the outlet **160** of the FTVU **100.** This nozzle vectoring unit (FTVU) **100** arrangement includes a fan actuator disc **120** powered by a fluid actuator **200** with afterburner **550,** which allows the vectoring unit (FTVU) **100** and/or the moving platform **650** to accelerate fast with additional 3 times thrustto-weight ratio during afterburner **500** activation. Similarly, an afterburner activation may provide an additional +500km/h on top of 1000km/h absolute speed of the vectoring unit (FTVU) **100** and/or the moving platform **650,** while the disc loading configuration **500** is a fan.

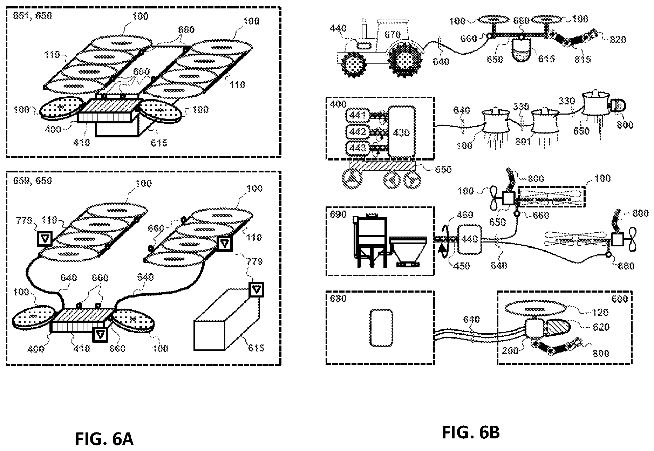

Alternatively, in configurations as illustrated schematically in **FIGs.5A-5B****,** the arrangement **500** of the nozzle vectoring unit (FTVU) **100** allows hypersonic speeds by redirecting the intake **150** air mass **580** of the vectoring unit (FTVU) **100** to pass and flow directly through the nozzle **550** configuration using active fluid stator **180** and a built-in hypersonic channel **185,** as not shown in **FIGs.6A-6B****.**

The autonomous robotic applications **800** in the present disclosure may include one or more fluid powered thrust vectoring units (FTVU) **100** attached on a single moving platform and/or autonomous robot **650.** Each Fluid thrust vectoring units (FTVU) **100** may have different or similar Disc loading configuration **500.** Each Fluid thrust vectoring units (FTVU) **100** attached on the single moving platform **650** may have different or similar power output or may have different or similar thrust force profile **525,** shape, and size **520** of the disc loading 500, and may have different or similar type of working fluid **320** types and may have different or similar thrust force output **170** as means of mass air flow **590, 595.**

The technique of the present disclosure may utilize one or more fluid powered thrust vectoring units (FTVU) **100** attached to an aircraft, aerial and/or aerospace vehicle and/or moving platform **650.** One or more attached thrust vectoring units (FTVU) **100** allows the moving platform **650** to projectile, lift, hover, move, taxi, fly, float, dive, tilt, Yaw, Roll, Pitch, maneuver and navigate in 6DOF in space.

Referring to the non-limiting example illustrated in **FIG.5B****,** the thrust force output **170** of vectoring units (FTVU) **100** refers as thrust force vector or propulsive force **170** derived from the acceleration of the air mass outlet flow **590, 595** of the vectoring unit (FTVU) **100.** The force output **170** of the vectoring unit (FTVU) **100** is represented by the disc loading **500,** shape **520** and profile **525** measured relative to the vectoring unit (FTVU) **100** geometry **101.** The thrust vectoring unit (FTVU) **100** generates a controllable propulsive force **170** with variable thrusting acceleration, which provides the moving platform **650** fast changing linear and angular acceleration values while it maneuvers in 6DOF in space.

In some embodiments, as illustrated in **FIG.5B****,** the force vector **170** size **175** or amplitude **175** is measured by Newtons or kg. The force vector **170** is a physical representation of the air mass flow **590,595** kinetic and thermodynamic energy combined in the form of acceleration in m/sec² times the mass of the air leaving the thrust vectoring unit (FTVU) **100** through the nozzle configuration **550, 553** and/or the exhaust **160** of the vectoring unit (FTVU) **100** as exemplified in **FIG.5A****.** The force vector **170** size or amplitude **175** may have geometrical relations **101** with the center of gravity and/or second moment of area and/or polar angular momentum and/or center of moment of inertia and/or gyroscopic axis and/or center of lift (CL) of the vectoring unit (FTVU) **100** and/or of the moving platform **650.**

Similarly, the force vector **170** angle **179** and/or angular direction **179** is measured by Radians, where the force vector **170** point of origin **173** is measured relative to the thrust vectoring unit (FTVU) **100** geometrical structure **101** and/or with relation to the center of gravity and/or second moment of area and/or polar angular momentum and/or center of moment of inertia and/or gyroscopic axis and/or center of lift (CL) of the vectoring unit (FTVU) **100** and/or of the moving platform **650.**

Thus, according to the present disclosure, the origin **173,** angle **179** and magnitude **175** of the Propulsive force **170** of the vectoring unit (FTVU) **100,** may refer to one or more thrust vectoring unit (FTVU) **100** combined and/or may refer to the moving platform **650** mass distribution, thermodynamic and aerodynamic properties relative to all types of three dimensions (3D) axes and coordinates **101.** and/or relative to a quaternion force **170** representation in 6DOF.

In some embodiments, a combination of one or more fluid powered thrust vectoring units (FTVU) **100** are attached on a single moving platform **650,** which may result, but not limited to a Vertical Take-Off and Landing (VTOL) vehicles and/or allows short take-off and landing (STOL) for any type of moving platform **650** such as, a piece of mechanized equipment **670, 690** of carrying or transporting something, on ground, at sea and/or through air. For example, in some embodiments, the powerplant **400** subsystem being a part of the moving platform **650** may be able to short take-off and landing while the rest of the moving platform **650** may a Vertical Take-Off and Landing (VTOL).

Additionally or alternatively, in some embodiments, aerial mechanized equipment, aircraft and/or aerospace vehicle and/or moving platform **650** may use thrust vectoring unit (FTVU) **100** with combination of ailerons and/or elevators through aerodynamic deflection using rudders, flaps and/or any other combination of aircraft control type of flight control surfaces **620** in order to aerodynamically control the force output **170** of the vectoring unit (FTVU) **100** and/or dynamics of the moving platform **650** in space. The aerodynamic surface controls **620** may interact with the air that may have different levels of air densities, air pressures and air temperatures. Hence, thrust vectoring unit (FTVU) **100** with or without attached controlled surfaces **620** allows the moving platform **650** to maneuver in 6DOF while controlling the moving platform **650** angle of attack, providing additional stabilization and/or managing the landing, lifting and the change in potential energy of the moving platform **650** itself.

Further according to some embodiments of the technique of the present disclosure, an aerial and/or aerospace moving platform **650** may have one or more fluid powered thrust vectoring units (FTVU) **100** attached on a single moving platform **650.** Each thrust vectoring unit **100** may have its own mainframe **110.** The attached thrust vectoring system **100** may gimbal, tilt, flip, flap, align, move and rotate while physically connected with the joint connector **660** part of the moving platform **650** mainframe **610** as shown for example in **FIG.2** and **FIG.3****.**

According to some embodiments, the Fluid powered thrust vectoring unit mainframe **110** is the moving platform **650** itself. For example, the fluid powered thrust vectoring units (FTVU) **100** may be part of the moving platform **650,** body/mainframe **610,** landing gear, control surfaces **620,** rotating cylinder structure, fuel-tank **420,** engine batteries **420** and/or wings **630** and/or parashot configuration. Additionally, or alternatively, in some embodiments, the thrust vectoring units **100** mainframe **110** may act aerodynamically and thermodynamically to simulate a duct casing **115** configuration, part of the moving platform **650** mainframe **610.**

Thus, according to the present disclosure, the fluid thrust vectoring unit (FTVU) **100** may have a total specific power and/or power density between 6kg/kW to 0.01kg/kW depending upon the vectoring unit (FTVU) **100** total mass in kg and the attached mass to the vectoring unit (FTVU) **100.** The vectoring unit (FTVU) **100** specific power also depends upon the vectoring unit (FTVU) **100** geometrical configuration **101** such as the fluid rotary actuator **200** properties, the type of the working fluid **320** and Actuator Disc **120** disc loading configuration **500.**

In some embodiments, as illustrated in **FIG.5A****,** a total Power-to-weight ratio (PWR), specific power, or power-to-mass ratio can reach 100kW/kg when chemically powered propellants and/or bipropellant combinations and/or fuel mixed with oxidizer may be used in nozzle configuration **550.** This vectoring unit (FTVU) **100** arrangement is similar to turbofan with afterburner setup.

According to the present disclosure, and as illustrated schematically in **FIG.5A****,** the fan configuration in this example has a number of Actuator Discs **120** coupled mechanically with the rotary actuator **200,** whereas the Afterburner is the nozzle configuration **550.** In the nozzle configuration **550,** a combustion unit **577** is configured to burn fuel from the fuel tank **420** to heat air received in the nozzle to accelerate it, optionally to hypersonic velocities.

In some non-limiting examples, there is joint operation **660** between two or more solids such as the fluid thrust vectoring unit (FTVU) **100** and between the moving platform **650.** The joint operation **660** is done by introducing a mechanical movement and motion between the moving platform **650** and the vectoring unit (FTVU) **100** itself which results in managing and directing the force output **170** generated from one or more thrust vectoring unit (FTVU) **100** attached on the moving platform **650.** In some embodiments, a combination of the mechanical joint **660** may comprise gimble mechanism, prismatic joint, pin joint, ball joint, knuckle joint, turn buckle cotter pin bolted, universal joint, U-joint and/or fluid actuator and/or electrical actuator.

Additionally, or alternatively, as shown in **FIG.6A****,** the Joints **660** on the moving platform **659** may be part of a cable reels, keeping the pipes (330) and other cables /and connection **(715,740,705)** illustrated here as lines **640.** The joint cables **640** are connected between the modular moving platform **659** and/or between the modular setup of thrust vectoring unit (FTVU) **100.** This modular setup of the moving platform **659** may allow the thrust vectoring unit (FTVU) **100** or multiple thrust vectoring units (FTVU) **100** to operate while the moving platform **650** may be detached from the application task **820** and/or detached from the main application robotics hardware **815** and/or detached from the moving platform payload **615** and/or detached from the from the moving platform **650** and/or detached from the powerplant **400.** Each mechanical joint **660** may include a set of motion sensors **779** measuring the joint 6DOF movements. This allows to measure the weight of the payload **615** and/or the main application **815** forces and torque. The sensor motion **779** may measure an additional information in real-time **777** such as the moving platform **650** angle of attract relative to the total thrust vector **170** of the total moving platform and/or the thrust vector **170** of each detached thrust vectoring unit (FTVU) **100.**

Referring again to the non-limiting embodiment illustrated in **FIG.6A****,** the fluid thrust vectoring unit (FTVU) **100** may be attached to the powerplant **400** mainframe **410** by the joint **660** as shown in the moving platform **659.** This joint operation **660** allows the powerplant unit **400** to hover by itself with less than 1kg/kW specific power. At this specific power density for example, the powerplant unit **400** may comprise number of masses added together such as fuel tank **420,425** as its energy source, engine **430** and a fluid pump **440** part of the powertrain **400** main components. However, when the hovering detached powerplant **400** fastened itself on a payload **615,** illustrated in **FIG.6A** as a moving platform **651,** the payload itself becomes the moving platform **650** main frame **610.** While the modular powerplant **400** is hovering with the attached payload **615,** the total moving platform **651** specific power may reach 6kg/kW. According to some embodiments, the mechanical joint **660** may be part of the unit **100** mainframe **110,115** and/or part of the payload **615** and/or any part of the moving platform **650** such as control surfaces **620,** wings **630,** payload **615** and/or its mainframe **610** and/or the applications of the moving platform **815,815.**

According to some embodiments of the present disclosure as illustrated in **FIG.3****,** the intake area **150** in meter square of the thrust vectoring units (FTVU) **100** allows air mass flow **580** to enter the thrust vectoring unit (FTVU) **100** and exist the unit **100** through the unit outlet **160** area as an accelerated air mass flow **590,** creating a Propulsive force **170.**

Additionally, or alternatively, vectoring unit **100** may comprise built-in channels **185** shown for example in **FIG.5A** that may include one or more intake ports **150** and one or more outlet ports **160** to coexist on a single thrust vectoring unit (FTVU) **100** and/or moving platform **650.**

Referring again to the non-limiting example illustrated in **FIG.3****,** in some other cases, the air fluid stator **180** configuration may be used as the thrust vectoring units (FTVU) **100** mainframe **110.** In some embodiments, the stator configuration is an active air stator **180** and may adjust its angle of attack actively, dynamically and in real-time by sending and receiving information from the computer system **700.** The activation and control of the stator **180** configuration may be managed by the computer system **700** real-time decision-making software **780** and/or based upon information received by set of sensors **771** measuring the air mass **580,585,590** temperature, pressure and velocity/acceleration before and after passing the stator **180** configuration of unit **100.**

In some embodiments, a combination of air fluid stator configuration **180** may be part of the thrust vectoring unit (FTVU) **100** mainframe **110** and/or part of the moving platform **650** and/or part of the moving platform mainframe **610.** The air fluid stator configuration **180** may provide a laminar air flow of the air mass **580** before entering the thrust vectoring unit (FTVU) **100** and/or while the air mass flow **585** travels within the thrust vectoring unit (FTVU) **100** and/or while the air mass **590,595** is leaving or exiting or exhausting the thrust vectoring unit (FTVU) **100.** In some embodiments, the air fluid stator configuration **180** may act as rudders configuration of the air mass **590,595** leaving the thrust vectoring unit (FTVU) **100** as for example shown in **FIG.5A****.**

The fluid thrust vectoring unit (FTVU) **100** may comprise an Actuator Disc **120** or combination of one or more discs such as Propeller, Rotors, Prop, fan, Airscrew, set of blades and/or any actuator disk whose working fluid is atmospheric air. When the Fluid Rotary Actuator **200** rotates, the Actuator Disc **120** provides movement of air mass flow **580,585,590** throughout the fluid thrust vectoring unit (FTVU) **100.**

Hence, the thrust vectoring system **100** may be built from a mainframe **110** attached to the moving platform **650.** In some embodiments of the present disclosure the fluid thrust vectoring unit (FTVU) **100** may be constructed with an aerodynamic structure in mind, for example a duct aerodynamic structure **115** while one or more Actuator Discs **120** are rotating within the fluid thrust vectoring unit (FTVU) **100** in opposite directions. This Coaxial Actuator Discs **120** and/or tandem rotors **120** configuration also known as coaxial/coax rotors and/or tandem rotors and/or Intermeshing rotors may provide the thrust vectoring unit (FTVU) **100** with no gyroscopic force, torque axis cancelation and doubling the effective area of disc loading **520** when compared to a single Actuator Disc configuration **120.**

In some embodiments of the present disclosure as illustrated in **FIG.2** and **FIG.3****,** the coupled mechanism **130** may couple mechanically the Actuator Disc **120** with the Fluid Rotary Actuator **200.** This allows the Actuator Disc **120** to get its power and/or torque and/or its rotational motion in a form of mechanical energy from the coupled Fluid Motor **200** or a Fluid Shaft Drive Motor **200** or a Fluid Rotary Actuator **200.** Additionally, or alternatively, the coupled mechanism **130** may be an integral mechanical part of the Actuator Disc **120** and/or may be an integral element of the Fluid Rotary Actuator **200.** In some cases, but not limited to current innovation, the coupled mechanism **130** may comprise of a gear, gearbox, colloquially gear, a Jesus nut, freewheeling unit, belt and pulley configuration, mast, drum, shaft rods, cupelling shaft and other transmission mechanism, teeter link, scissor link, swashplates, hinges and/or mechanical bearing such as plain bearing, Ball bearing, roller bearing, rolling-element bearings, rollers Fluid, Flexure bearing, ceramic bearings, journal bearing, sleeve bearing, rifle bearing, composite bearing, a noncontact bearing and/or a magnetic bearing.

In some embodiments of the present disclosure, the Actuator Disc **120** is driven and powered mechanically by kinetic energy derived from the attached Fluid Rotary Actuator **200.** One Actuator Disc **120** may be powered and driven by one or more Fluid Rotary Actuators **200.** In some other non-limiting examples, Fluid Rotary Actuators **200** may power and drive one or more Actuator Discs **120.** The Fluid Rotary Actuators **200** may couple and transfer mechanical energy and motion to the Actuator Disc **120** such as force, velocity, acceleration, torque, angular momentum, linear momentum, angular acceleration and/or any other type of mechanical energy and motion.

In a similar manner, the Actuator Disc **120** may be powered by air mass flow **580** which forces itself into the thrust vectoring unit (FTVU) **100.** This forced air mass flow **580** may be generated by the motion of the moving platform **650** in space and/or when the vectoring unit (FTVU) **100** loses potential energy. As a result, this forced air mass flow **580** forces the actuator disc **120** to rotate. This autorotating of the actuator disc **120** within the unit **100** creates a mechanical energy on the coupled Fluid Rotary Actuator **200** forcing it to act as a fluid pump. As a result, the accumulated mechanical energy generated on the Fluid Rotary Actuator **200** is then converted into fluid energy, as an energized working fluid **401** on the powertrain **300.**

Thus, according to the present disclosure, when the forced air mass **580** enters the unit (FTVU) **100,** the forced Fluid Rotary Actuator **200** generates energized fluid **401** and sends it to the powerplant **300** via the piping network **330.** At the same time, the powertrain **300** may distribute the generated energized fluid **401** to the neighboring fluid thrust vectoring units (FTVU) **100** which is attached on the moving platform **650.** This autorotation configuration may allow one unit (FTVU) **100** to generate fluid energy, while the second neighboring fluid thrust vectoring units (FTVU) **100** may use this generated fluid energy to create a thrust vector **170.** According to some embodiments, the generated energized fluid **401** by the forced Fluid Rotary Actuator **200** may be transferred to the powertrain **300** and stored as fluid energy within a fluid storage **325** and/or accumulator **325** and/or return tank **325** part of the powertrain **300.**

For example, a forced air mass **580** may pass through a thrust vectoring unit (FTVU) **100** while the moving platform **650** losses or experiences changes in potential and kinetic energy. This may take place while the moving platform **650** is during braking and/or during gliding and/or parachuting and/or while the moving platform **650** may change its angle of attack.

Thus, according to the present disclosure, this event of a forced air mass **580** passes through a thrust vectoring unit (FTVU) **100** which may take place while other vectoring thrust systems **801** and/or one or more thrust vectoring units (FTVU) **100** on the moving platform **650** are still in operation and/or creating thrust forces. The fluid thrust vectoring units (FTVU) **100** that a forced air mass **580** passes through may generate energized fluid **401** by the forced rotation of Actuator disc **120** derived by the forced air mass flow **580** passed thought thrust vectoring units (FTVU) **100.** In a similar manner, an electrical vectoring thrust system **801** attached to the moving platform **650** may generate electrical power on the electrical grid **740** from the energy of a forced air mass **580** passing through.

In some embodiments of the present disclosure, the Actuator Disc **120** is driven and powered by the Fluid Rotary Actuator **200.** In other cases, the actuator disc **120** may autorun or freewheeling by the forced air mass **580** entering the thrust vectoring unit (FTVU) **100.** Additionally, or alternatively, the torque generated by the actuator disc **120** from the forced air mass **580** may be equalized with the fluid rotary actuator **200** torque output **190** and even exceed the stall torque **190** of the rotary actuator **200.**

Referring now to **FIG.4****,** according to the present disclosure, fluid rotary actuator **200** may change, alternate, pause, break, interrupt, start, activate its driven torque **210** based upon the fluid rotary actuator **200** and/or the Actuator Disc **120** angular position **290** and/or angular velocity **295** and/or angular acceleration **299.** This allows management and control of the air mass passing **585** through the unit **100** and creating the thrust vector **170.** The driven torque **210** generated by the fluid rotary actuator **200** may be controlled by the energized working fluid **401** entering the rotary actuator **200** and/or by the working fluid leaving **409** the rotary actuator **200.**

Since the fluid rotary actuator **200** can operate on a stall torque **190** if needed, the thrust vectoring unit (FTVU) **100** can pause instantly the motion of the actuator disc **120** at a particular angular position **290.** The instant pause of the actuator disc **120** by the rotary actuator **200** may convert the stationary actuator disc **120** to control surfaces **620** and/or a stator configuration **180** and/or wings **630.** Similar, the thrust vectoring unit (FTVU) **100** can instantly create a negative instant torque **211** and/or instantly create an opposite mechanical motion which in turn slowdowns the rotational speed of the disc **120** or even rotates the actuator disc **120** in the opposite direction. This instant torque **210** may instantly generate a negative amplitude **175** of its thrust force **170** of the thrust vectoring unit (FTVU) **100.** Similarly, the fluid rotary actuator **200** can disengage the torque **212** from the actuator disc **120** allowing the disc **120** together with the rotary actuator **200** to autorun or freewheeling without introducing kinetic energy to the working fluid **409** entering the actuator **200** and/or without introducing kinetic energy to the working fluid **409** existing the actuator **200.**

In some cases, but not limited to current innovation, the output torque **210** of the rotary actuator **200,** as shown for example in **FIG.4** may result from the working fluid changes in volume **220** and/or the working fluid **409** changes pressure **230** which enters and/or leaves the rotary actuator **200** relative to the rotary angular properties **290,295** and **299** and/or according to time domain **777** driven by the computer **700** real-time clock **707.** For example, the angular position **290** of the rotary actuator **200** and/or of the actuator disc **120** may be measured by the set of sensors **775** that measures additional mechanical and fluid dynamic properties of the rotary actuator **200** and/or the actuator disc **120** and/or the working fluid **409** entering and leaving the rotary actuator **200** which enables the computer **700** real-time decision-making software **780** to change and alter the angular instant torque **210.**

In another embodiment, illustrated in **FIG.3****,** the computer **700** real-time decision-making software **780** may change and alter the angular instant torque **210** of the rotary actuator **200** according to the information derived from sensors **781,785,789** which measure the thrust vectoring unit (FTVU) **100** and/or moving platform **650** and/or moving platform **650** mission **800.** For example, the navigation sensor **781** such as GPS module, IMU and timekeeping aids on the North East down (NED) coordinates may measure the position on earth and in space. This sensor **781** may provide the real-time clock **707** with astronomical time, allowing the realtime software **780** to determine and filter the motion of the moving platform **650** and/or of the vectoring unit (FTVU) **100** in space and time. The sensor **785** measures motion vectors such as accelerations in 3 degree of freedom (3DOF) and similar angular velocities in 3 degrees of freedom. According to some embodiments, sensor **785** may also measure the physical movement of the wings **630** and/or control surfaces **620** with relations to the moving platform **650** geometrics and/or with relations to the vectoring unit (FTVU) **100** geometrics. Additionally, or alternatively, the sensor **789** may be part of the main application **800** task **815** and/or the application robotics payload or job **820.** This set of sensors **789** may include vision hardware, artificial Intelligence (AI) sensors and/or any optical sensing hardware, radio frequency (RF) sensing hardware and embedded electronics hardware for means of communications and computation.

In some other embodiments, exemplified in **FIG.5B****,** the thrust vector **170** of the vectoring unit (FTVU) **100** has angle **179,** and amplitude **175.** This vector **170** may be generated by the actuator disc mechanism **120** similar to a helicopter main head system which comprises hinges, swashplate, scissor links, torque link, hub trunnion allows each blade and/or all the blades together to feather, flap and lead/lag in a mechanical manner.

According to the present disclosure, as shown in **FIG.2****,** the actuator disc mechanism **120** may include monospinner configuration and/or swashplateless rotor configuration which allows each blade and/or all the blades together to feather flap and lead/lag in a passive mechanical manner during a single revolution by changing and alternating the instant angular torque **210** while the disc **120** is in rotation.

Additionally, or alternatively, in a swashplateless rotor configuration **130** as for example shown in **FIG.2****,** the instant angular torque **210** may alternate, as between opposing angular positions **290** or may vacillate in a single revolution of the teetering hinge angle. This may result in the actuator disc **120** changing its rotating blades from high pitch to low pitch, similar to change the rotor **120** angle of attack for each blade, part of the actuator disc **120.**

This may be possible by alternating the actuator disc **120** rotating torque **210** during a single revolution, while keeping the rotation speed of the disc **120** at a constant pace or at a constant Revolution Per Minute (RPM). For example, the rotation speed of the disc **120** is constant when measuring the time it takes to the disc **120** to complete a single revolution in 360dgrees or 2 Pi repeatedly. However, during a single revolution at a particular angular distance **290** or at numbers of angular positions **290,** the angular instance velocity **295** may be altered and/or the angular acceleration **299** may be changed. The changes in instance angular velocities and acceleration **295,299** during a single revolution may take place twice or more times per revolution in order to keep a constant rotational speed of the disc **120.**

According to the present disclosure, the rotary **200** and the disc **120** may change and alter repeatedly the angular torque **210** according to an angular position **290** which geometrically **101** related to the thrust vectoring unit (FTVU) **100** mainframe **110** and/or to the moving platform **650** mainframe **615** and/or with relations to the vector properties of the thrust force **170,173, 175,179.** This change in instant angular torque **210** alongside the angular position **290** of fluid rotary actuator **200** and with a fixed reference to the thrust vectoring unit (FTVU) **100** mainframe **110** and/or geometric **101** may provide real-time adjustment of the disc loading **500** profile **525,** size **520** and shape while the disc **120** is rotating.

Thus, according to the present disclosure, the change and alter repeatedly of instant angular torque **210** according to the moving platform **650** aerodynamic needs and mission **800** may be derived from a pressure variation **230** and/or from volume variation **220** of the working fluid **320** entering and/or exiting the fluid rotary actuator **200.**

Referring again to the non-limiting embodiment illustrated in **FIG.2****,** the combined forces such as: an instant angular torque **210,** fraction, centrifugal and gyro forces may act at the same time on the blade teetering hinge mechanism **130, 131, 132.** When for example the instant torque **210** may change its value, a change in the force summation acting on the blade teetering hinge angle, part of the hinge mechanism **130** may take place too. As a result, the blade connected to the hinge mechanism **130** may vary its angle of attack, resulting in changes in disc loading thrust profile **525** of the thrust vectoring unit (FTVU) **100.** This teetering force may act and apply on the disc **120** while in rotation. In some cases, but not limited to current innovation, the teetering hinge angle may have an actuator built in (not shown), part of the hinge mechanism **130** in order to actively correct the teetering angle, in other cases the teetering hinge mechanism **130** may balance itself by the total forces acting on the hinge resulting in changes of the blade angle of attack in real time and with relations to the angular position **290.**

According to the present disclosure, as for example shown in **FIG.3****,** the real-time decision-making software **780** may compute **700** this disc **120** teetering combined forces by fusing information from the sensor **779** which provides in 6DOF tilt, acceleration, gyro and/or Nosie and vibration acting on the thrust vectoring unit (FTVU) **100** mainframe **110** with relations to its geometrical **101** properties. According to some embodiments, sensor **771** provides information about the disc **120** output in real-time, mainly measures the disc loading profile **525** by measuring the air mass **580,585,590,595** stages and thermodynamic status such as temperature, pressure, volumetric flow, air mass and/or air entropy, air humidity/ air density. Additionally, or alternatively, the information about the instant angular torque **210** of actuator **200** may be derived from the sensor **775,** while still the actuator discs **120** keeps a constant rate of speed rotation measured in RPM.

As illustrated schematically in **FIG.2****,** according to the present disclosure, two rotary actuators **201,202** may have coupled mechanism **130, 131, 132** with Coaxial Actuator Discs **120, 121,122** within a single thrust vectoring unit (FTVU) **100.** For example, a single rotary actuator **202** is a hollow shaft **132** fluid motor **200** which is connected to a swashplateless teetering hinge rotor **132** that rotates clockwise **291.** The second Coaxial Actuator Discs **121** in this example connects with the second teetering hinge rotor **131** driven by the second rotary actuators **201.** Hence, both discs **121, 122** together with both shafts **131,132** and actuators **201,202** may share a single rotation axis **195** and may share the same disc loading area **520.**

In some embodiments of the present invention, the Actuator Disc **120** is driven and powered by the Fluid Rotary Actuator **200.** Since the Fluid Rotary Actuator **200** can adjust its maximum torque at any desired rotational speed **190** and at the same time to alternate its instant angular torque **210** in real-time. Hence, the Actuator Disc **120** may accommodate almost any suitable geometric rotor solidity ratio. Similar, the actuator disc **120** may be designed with rotor hub-to-blade ratio according to the application **800,** since the Fluid Rotary Actuator **200** may provide any instant torque **210** at any desired instant rotational speed **295** and/or global rotational speed **190.**

For example, according to the present disclosure, a moving platform **650** may in some cases be designed in a shape of an air-cushion vehicle (ACV), hovercraft and/or a vertical take-off vehicle, short take-off and landing vehicle. The moving platform **650** may have a thrust vectoring unit (FTVU) **100** comprised with Actuator Disc **120** as centrifugal blades providing the moving platform **650** with inflate pressure within its mainframe **615** and/or its inflated skirts. One or more additional attached vectoring unit (FTVU) **100** on the moving platform **650** may have an actuator Disc **120** with high rotor solidity >0.8 in order to provide an air cushioning mass flow and/or vertical take-off thrust vector **170** to the moving platform **650.** Similarly, additional attached vectoring unit or units (FTVU) **100** may provide the moving platform **650** with Actuator Disc **120** with low rotor solidity ratio of say 0.1. This vectoring unit or units (FTVU) **100** with low rotor solidity ratio may provide the moving platform **650** with thrust surge and sway forces **170** of the moving platform **650.**

Alternatively, in configurations of a moving platform **650** with only two or more tandem rotors configuration, one vectoring unit (FTVU) **100** may rotate clockwise with actuator disc **120** that has large area of disc loading **520** and rotor solidity ratio of say 0.1. While the second tandem vectoring unit (FTVU) **100** may rotate anticlockwise and has an actuator disc **120** with a smaller area of disc loading area **520** but with rotor solidity ratio of say larger than 0.6. This tandem rotor configuration may allow an odd number of tandem vectoring unit (FTVU) **100** to be attached on a single moving platform **650.**

In some embodiments of the present disclosure, exemplified in **FIG.3** an actuator disc **120** is driven and powered by the Fluid Rotary Actuator **200.** The fluid rotary actuator **200** has one or more inlet ports **250** and has one or more outlet ports **260** connecting to a network of pipes **330,** part of the powertrain **300.** The powertrain **300** may work in an open loop configuration when the working fluid **320** is a comprisable fluid such as gas, and/or air. Alternatively, in configurations of an open loop, the outlet port **260** of the rotary actuator **200** may be used as a gas exhaust, vent, throttle and/or any pressure or flow resistor.

In some embodiments, when the working fluid **320** is non-compressible fluid, such as oil, the powertrain **300** may work in a closed loop configuration. In a close loop configuration, the rotary actuator **200** outlet port **260** connects with the low pressure returned network of pipes **330,** part of the powertrain **300.**

In some cases, but not limited to current innovation, the fluid valving device **720** is an integral electro-mechanical element of the fluid rotary actuator **200** and/or of the powertrain **300,** part of the piping network **330** and/or an integral element of the powerplant **400,** part of the fluid pump mechanism **440.** The electro-mechanical fluid valving device **720** may control, restrict, release, alternate and/or valve the working fluid **320,401,405, 409** entry to the inlet port **250** of the rotary actuator **200.** Similarly, the fluid valving device **720** may act in the same manner on the working fluid **320,401,405, 409** exiting the outlet port **260.**

In some embodiments, a combination of electro-mechanical fluid valving device **720** may be placed before the working fluid **320,401,405, 409** enters the rotary actuator **200** and/or may be placed after the working fluid **320,401,405, 409** leaves the rotary actuator **200,** allowing the computer system **700** to manage and control by the software **780** the physical actions of the rotary actuator **200** such as breaking and/or instant changing direction of disc **200** rotation and/or allowing freewheeling. Moreover, the fluid valving device **720** controls and manages physically the amount of fluid **213, 212, 211** in molecular weight and/or volume **220** and/or pressure **230** and/or fluid entropy passing through the actuator **200,** shown in **FIG.4** as area **213,** area **212** and area **211** or an integral of **210** curves.

In some embodiments, a combination of one or more fluid powered thrust vectoring units (FTVU) **100** are attached on a single moving platform **650.** In this example, each thrust vectoring units (FTVU) **100** may result in total Power Density of 0.3kg/kW, where the thruster unit 100 weights between 0.05kg up to 500kg. This class of fluid powered thrust vectoring units (FTVU) **100** comprises a Fluid Rotary Actuator **200** operating on compressible fluid such an Air, part of the Trust Vectoring system **(TVU)100.** The air powered thrust vectoring units (FTVU) **100** can be used in volatile atmospheres, where electrical motors are neither allowed nor suitable. Similarly, an air powered thrust vectoring units (FTVU) **100** may provide the actuator disc **120** with a torque rating of about 1N*m with vectoring units (FTVU) **100** below 1kg, and up to 1kN*m with thruster unit **100** weight above 1kg.

Additionally, or alternatively, in some embodiments, a combination of one or more fluid powered thrust vectoring units (FTVU) **100** are attached on a single moving platform **650.** Each thrust vectoring units (FTVU) **100** may result in total Power Density of 0.05kg/kW where the thruster unit 100 weights between 1kg up to 5,000kg. This class of fluid powered thrust vectoring units (FTVU) **100** comprises a Fluid Rotary Actuator **200** that operates on non-compressible fluid **320** such as hydraulic oil. The hydraulic powered thrust vectoring units (FTVU) **100** may reach a power rate density of 1.5MW/kg*s whereas a hydraulic power thruster unit **100** weights say 1000kg can reach up to 1MW/s power rate. For example, a moving platform **650** with one or more hydraulic powered thrusters (FTVU) **100** may have a total weight of less than 8Tones, while the moving platform **650** may lift a payload of up to 30Tones with disc loading area **520** of say 50kg/m2 and below.

Additionally, or alternatively, the fluid thrust vectoring unit (FTVU) **100** introduced here has low polar moment of inertia **190** by tenfold when compared with existing engine Shaft cupelled/direct Thrust Vectoring System (STVS) **804** and/or Electrical Thrust Vectoring System (ETVS) **801** with similar mechanical energy, torque, angular motion and with identical total disc loading area. For example, a moving platform **650** may comprise number of thrust vectoring units (FTVU) **100** attached, and includes a powerplant **400** and a powertrain **300** and may have a total dry weight of say 100kg. This moving platform **650** setup can generate up to 500kgf with little to non-polar moment of inertia **190,** as the rotating elements within the moving platform **650** are mainly the actuator disc **120,** part of the thrust vectoring unit (FTVU) **100.** This moving platform **650** may not comprise a rotating mass in a shape of a shaft nor rotating mass in the shape of an electrical coils and/or magnates. According to the present disclosure, a moving platform **650** with a low polar moment of inertia **190** may maneuver and accelerate without the resistance to angular displacement for forces such as gyro, centrifugal and internal torque/ torsion.

In some embodiments of the present disclosure, the Fluid Rotary Actuator **200** is powered by the working fluid **320** which derived from the fluid powertrain **300** by a network of pipes **330.** The working fluid **320** may be a compressible fluid such as an air gas for example. These types of working compressible fluids **320** may allow the Fluid Rotary Actuator **200,** part of the Thrust Vectoring unit **100** to have a mechanical configuration of air motors such as rotary vane, axial piston, radial piston, gerotor, turbine, V-type, and diaphragm motors. Similarly, these mechanical configurations of air motors may be used as gas pump and/or a compressor **440** when a useful mechanical work **460** from the engine **430** drives these air pump **440.** Hence, a gas pump and/or compressor **440,** part of the powerplant **400,** may feed the energized working fluid **401,409** with mass flow rate and pressure into the powertrain **300** network of pipes **330.**

In some embodiments, the working fluid **320** of the Fluid Rotary Actuator **200** may be non- compressible fluid such as Hydraulic Oil. Thus, according to a broad aspect of the present invention, the Fluid Rotary Actuator **200,** part of the hydraulic powered thrust vectoring unit (FTVU) **100** may comprise hydraulic and/or Hydrostatics and/or non-compressible fluid motor configuration such as Gear Motors, Vane Motors, Piston Motors, Radial-Piston, Axial-Piston Motors, Angled axis motor, Low-speed hydraulic motors, Outside cam motors, Inside eccentric cam motors, Two-flow direction motor and/or Low-end orbital motors. In some cases, but not limited to current innovation this non-compressible fluid motor configuration may be used as a working fluid pump **440** which gets its useful mechanical work **450** from the attached engine and/or power unit **430** and/or from self-generated energized working fluid unit **670, 680, 690,** a remote part of the moving platform **650.**

According to the present disclosure, the pump **440** mechanical configuration and/or working principle of energized the working fluid **401** may include pump setup such as onpositive-displacement pump, centrifugal pump, axial pump, radial pump, positivedisplacement pumps, reciprocating pumps, rotary pumps, gear pumps, external gear pumps, lobe pump, internal gear pumps, gerotor pumps, cam pump, screw pumps, vane pumps, piston pumps, axial piston pumps, radial piston pumps, reciprocating pumps.

According to some embodiments, as illustrated in **FIG.5A****,** a nozzle configuration **550** may be placed on the thrust vectoring units (FTVU) **100** outlet **160** providing additional control of the propulsive force **170** leaving the thrust vectoring units (FTVU) **100.** In some embodiments, a nozzle configuration **550** of the thrust vectoring units (FTVU) **100** may change dynamically and in real-time the characteristics and/or the entropy of air mass **590** entering the nozzle mechanism **550.** The nozzle **550** may transfer the fluid properties of the entered air mass flow **590** in temperature and/or pressure and/or mass and/or velocity and/or acceleration and/or fluid energy and/or the entropy of the air mass passing through. This transformation may take place by changing the nozzle exhaust area **553** and/or adding combustion process **577** and/or by adding propellant **420** and/or by changing the nozzle angle **551** with respect to the thrust vectoring units (FTVU) **100** geometry **101.** These processes also known as nozzle control by Geometric area ratios, by Effective area ratios and/or by Differential area ratios.

Thus, according to the present disclosure, an additional degree of freedom is introduced to the propulsive force **170** in angle **179** and amplitude **175** while passing through the nozzle **550** configuration. The air mass flow **580** entering the thrust vectoring unit (FTVU) **100** may leave the vectoring unit (FTVU) outlet **160** as accelerated air mass flow **590.** Additionally, or alternatively, part or some of the accelerated air mass flow **590** may leave the vectoring units (FTVU) **100** while part or some may enter into the nozzle mechanism **550,551,553** and then leave or exist or exhaust the vectoring unit (FTVU). Similar, part or some of the of the entered air mass flow **580** to the vectoring unit (FTVU) **100** may directly pass by the built-in channels **185** through the nozzle mechanism **550** and exist the vectoring units (FTVU) **100** as accelerated air mass flow **595** through the nozzle outlet **553.**

Hence, the computer system **700** of the thrust vectoring units (FTVU) **100** and/or of the moving platform **650** may control the thrust vector **170** of the vectoring units (FTVU) **100** by actively managing the nozzle **550** features. In some cases, but not limited to current innovation nozzle mechanism **550,551,553** and methods may comprise of Axisymmetric, Converging-diverging nozzle (C-D), Converging nozzle, Effective Vectoring Angle nozzle, Fixed nozzle, Fluidic thrust vectoring nozzle, Geometric vectoring angle nozzle, Three-bearing swivel duct nozzle (3BSD) , Three-dimensional (3-D) and Two-dimensional (2-D)vectoring nozzle, Thrust vectoring (TV) nozzle, Thrust-vectoring flight control (TVFC) nozzle, Two-dimensional converging-diverging (2-D C-D) nozzle

The moving platform **650** may have a fluid powertrain **300** that is physically connected using piping constellation **330** between the powerplant **400** and the thrust vectoring system (FTVU) **100.** In some embodiments one or more thrust vectoring system **100** may connect to one or more powerplants **400** using long, flexible and lightweight pipe constellation **330,640.** In other embodiments, the piping network **330,640** of the fluid powertrain **300** is rigid, part of the moving platform main frame **610** and/or of the powerplant mainframe **410** and/or of the thrust vectoring system (FTVU) **100** mainframe **110.**

According to the present disclosure, the fluid powertrain **300** transfers the energized working fluid **401** generated by the powerplant **400** and/or by anther autorunning vectoring system (FTVU) **100** and/or by the stored fluid energy **325** to another thrust vertical system **100.** Hence, the energized working fluid **401** may flow from the fluid powertrain **300** into the Fluid Rotary Actuator **200,** part of the thrust vectoring system **100.** The Fluid Rotary Actuator **200** converts the fluid energy **401** into kinetics energy as a useful mechanical work on the actuator disc **120.** After doing work, the working fluid **409** leaves the Fluid Rotary Actuator **200** via the outlet port **220** and returns to the powertrain **300** via a network of pipes **330.**

The term "fluid powertrain" **300** may include, but not limited to a fluid power device, fluid mechanics network of pipes **330,** fluid connectors, fluids accessories such as hydrostatics transmission, pneumatics parts and/or hydraulic elements. According to the present disclosure, the fluid powertrain **300** may include one or more Accumulators **325** connected in parallel and/or serial, control valves **720,** filters regulators, lubricators and/or silencers and/or fluid sensors and/or embedded fluid-electronic hardware. Similarly, the electro-mechanical valving control device **720,** may have a powertrain **300** accessories and elements such as an electrohydraulic controls and solenoids providing the rotary actuator **200** with A Port, B Port, sink, pilot link, **705** com, **715** power electronic cables and **740** electrical power inputs and outputs.

Thus, according to the present disclosure, the powertrain **300** may comprise Fluid statics or hydrostatics hydraulics powertrain and/or pneumatics powertrain and other gases fluid dynamics, Pilot pipes, electrical attached mechanism on a fluid direct operation device which may include an energy storage, pressurized tank, drain out tank or sink, lubrication gear and cooling/heat recovery devices, heat pumps and/or refrigeration units and fluids. According to some embodiments, the working fluid **320** may act as a refrigeration fluid, where heat exchange ribs **370** are shown for example in **FIG.3****.** In other cases, a heat pump setup is included in the powertrain subsystem **300,** allowing to use fluid energy **401** for cooling purposes.

In some embodiments of the present disclosure the fluid powertrain **300** is connected to one or more Fluid Rotary Actuators **200** and at the same time, the fluid powertrain **300** is also connected to one or more powerplants **400.** The term "powerplant" may include, but not limited to an energy source **420** that feeds electrical energy **450** and/or fuel energy **450** to an engine/motor **430,** as for example shown in **FIG.2****.** The engine/motor **430** is mechanically coupled **450** with a fluid pump/compressor **440.** A powerplant **400** may have one or more of energy sources **420,470** such a batteries pack **470** and/or fuel tank **420.** Similarly, powerplant **400** may have one or more of engines/motors **430** mechanically coupled with one or more pump/compressors **440.** The powerplant **400** may have a structural frame **410** that is part of the moving platform **650.** In some embodiments, the powerplant **400** has its own frame **410** which is not part of the moving platform mainframe **610.**

In other configurations illustrated in **FIG.6B****,** the powerplant **400** and its frame **410** may have wheels, flywheels, tracked wheels, railroad wheels, flanged wheel, tracks and/or any other means of traveling on ground and/or creating friction with objects on the ground. In some configurations, **650, 670, 680, 690,** the powerplant **400** may have means of drive on ground, creating ground to powerplant **400** friction and/or displacement in meters between the ground and powerplant **400** mainframe **410.**

Similar configurations in other embodiments may allow the powerplant **400** to be part of a ship, a boat-shaped container, a boat and/or other means of moving powerplant **400** which is floated and/or propelled on water bodies, on water surfaces and under water surfaces and/or submerged within and between. Motion through water of the powerplant **400** may include other stages/phases of water such as liquid, snow and ice. In some embodiments of the present disclosure, the powerplant **400** is anchored on the ground and/or on a water body and/or anchored on ice and snow and/or anchored on a known moving platform.

In some embodiments of the present disclosure, as shown in **FIG.6B****,** the moving platform configuration **600** has a powerplant **400** configuration **680** that may have one or more thrust vectoring system **100** attached to its frame **410,** this provides the powerplant **400** to jump, hover, move, taxi, fly, tilt, yaw, roll, pitch, and maneuver independently of the moving platform mainframe **610.** In some other embodiments the powerplant mainframe **410** may maneuver in 6DOF independently of other thrust vectoring system (FTVU) **100** part of the moving platform **650.** According to some embodiments, the powerplant frame **410** may maneuver in 6DOF independently while sharing and connecting **640** with other self-hovering thrust vectoring system (FTVU) **100** that may also share and connect by the same powertrain **300** network of piping **330** and cables. Additionally, or alternatively, in some embodiments, the powerplant **400** mainframe **410** may connect and share powertrain piping network **330** and other cabling **740,715,705** and communication means **799,795,791** illustrated in **FIG.6A** as line **640.**

In some embodiments of the present disclosure the engine/motor **430,** part of the powerplant **400** consumes energy from the energy sources **420, 470** and converts this energy into useful work **460,** resulting in kinetic energy on a shaft **450.** The engine/motor **430** transfers this useful mechanical work **460** to the fluid pump/compressor **440,** and in turn the fluid pump/compressor **440** is charging the entering working fluid **405** with fluid energy. For example, in some embodiments the working fluid **320** is an oil, and so the fluid pump **440** charges the entering working fluid **405** with hydraulic energy. Similarly, when the working fluid **320** is an air, the fluid pump **440** charges the entering working fluid **405** with a pneumatic energy. This working fluid **401** line enters the powertrain subsystem **300** and then into the Fluid Rotary Actuator **200,** part of the thrust vectoring unit (FTVU) **100.**

In some cases, a powerplant **400** may comprise number of pumps **440,** each linked directly with the rotary actuator **200** by a piping constellation **330.** In some embodiments, a combination of fluid pump may be used, one for example as a heat pump **440** cupelled with shaft to the engine **430** releasing heat accumulated by the working fluid **320** using the radiator **320,** where the other pumps **440** on the same powerplant **400** may be used to energize the working fluid **320** for the purpose of propelling one or more actuators **200** with an energized working fluid **401.**

In some embodiments, a combination of one or more fluid powered thrust vectoring units (FTVU) **100** attached on a single moving platform **650** create a total Disc Loading Configuration **500** of the moving platform **650.** Each thrust vectoring unit (FTVU) **100** may result in well-defined Disc loading size **520** in meter squared.

According to some embodiments, the thrust vectoring units (FTVU) **100** may have Disc Loading Configuration **500** where the payload **615** of the moving platform **650** acts as the mainframe **610** of the moving platform **650.** Once the moving platform **650** has completed its mission of transferring the payload **615,** the moving platform may continue its mission without its payload **615** in a modular manner. In some embodiments, the modular moving platform **650** may detach from its mainframes **110,410,610** while landing, lifting, carrying, hovering and/or during a mission. This detached mode of the moving platform while hovering and maneuvering in the air may allow the powertrain **300** elements such as piping **330** and/or parts of the computer system **700** such as communication **705,** power-electronics **715** and/or electrical grid **740** cables to be connected between the detached and modular parts of the moving platform **650.** According to this example, the assembled configuration of the modular moving platform **650** while lifting and hovering with a payload of say 30Tones may have a disc loading **500** configurations with power density of above 6kg/kW and with a disc loading of 50kg/m2. According to this example, and in the case of detached modular moving platform **650** without the payload **615,** the moving platform **650** may have a higher hovering efficiency of say less of a 3kg/kW with less of 20kg/m2 disc loading.

According to some embodiments, the moving platform **650** without payload **615** may reach a high hover vertical lift efficiency with flexible Disc Loading **520** area reaching a 0.1kg/m2 of gross weight to disc loading area of the moving platform **650.** Additionally, or alternatively, a combination of one or more fluid powered thrust vectoring units (FTVU) **100** may be used as a human powered helicopter. According to this example, the human powered moving platform may have a human as the powerplant **400** with up to 7-4W/kg power generation creating a vertical lift efficiency of say 512kg/kW and 0.1kg/m2 of disc loading.

Similar, an efficient maneuvering platform **650** powered by a fueled engine **430** with total gross weight of say 200kg, may have one or more thrust vectoring units (FTVU) **100.** According to this example, the fueled powered moving platform may provide the moving platform **650** with only lkg/kW while keeping less than 15kg/m2 disc loading, assume powerplant **400** reaches a max of 0.5kg/kW includes fuel tank.

In some embodiments of the present disclosure, the Actuator Disc **120** and the Fluid Rotary Actuator **200,** part of the fluid thrust vectoring unit (FTVU) **100** have an internal computer system **700** on board and/or attached and/or wired / embedded. The Realtime clock **707** may have an interrupt handler function **777** or the timer interrupt handler **777** in this case to perform the above-mentioned periodic duties on the electro-mechanical valving **720** in a PWM manner **711** with electrical power variation **713** and/or servo control **719** positioning with power variation **717.** In some cases, the signals **711,719** that drive the electrical mechanical valving device **720** are represented as digital signals **711** and/or analogue signals **719** which control and manage the working fluid entering **730** passing **320** and/or leaving **735** the valving device **720.** In some cases, the signals **711,719** may act together and at the same time on the valving device **720** synchronized by the timeline **777.** In other embodiments the signals **711,719** may act independently and/or may alternate between the two signals **711** and **719** synchronized by the timeline **777.**

In some embodiment, illustrated in **FIG.2** and **FIG.3****,** the power-electronics pulses (Volts/Amps) and/or signals **711,719** and/or electrical average power in (Watts) **711,719** are transferred to and from the fluid valving device **720** by the power electronics and control connections **715.** Once the signals **711,719** have arrived to the fluid valving device **720,** the device translates the Direct Current (DC) and/or Alternated (AC) and/or electrical instant power (W) and/or the instant electrical energy (W/sec) **711,719** and/or any Pulse-width modulation (PWM), or pulse-duration modulation (PDM) of electrical signals **711,719** into a mechanical movement that acts as a valving mechanism on the fluid enters **730** and leaving **735** the valving device **720.**

For example, as shown in **FIG.4****,** a valving device **720** part of the actuator **200** body may comprise one or more solenoids and/or servo motors and/or combination of the two. The computer system **700** may send a power electronics signals **711** and/or **711** from the power electronics board **710** to the valving device **720.** As a result, the electromechanical valving device **720** may provide the rotary actuator **200** with instant torque **210** and/or fluid power **213,212** and **211** which acts on the actuator **200** internal mechanism to provide a useful work on the actuator disc **120.** Hence, the instant torque **210** controls and manages the actuator **200** angular motion and position **290,295,299.** This method of control may occur repeatedly and in a synchronized manner by the line time **777.**

In some embodiments of the present disclosure each moving platform has one or more thrust vectoring unit (FTVU) **100.** Each thrust vectoring unit (FTVU) **100** may have an independent computer system **700** embedded within and/or one or more real-time thruster controller units **700** with a clock **707** and a real-time software **780** per single moving platform **650.** In other embodiments there is a single computer system **700** that connects to number of power electronics boards **710,** each attached to and managing a single thrust vectoring unit (FTVU) **100** in real-time, part of a single platform **650.** Similarly, each thrust vectoring unit (FTVU) **100** may have only one or more power electronics board **710** attached / connected to a remote computer system **700** and/or remote server cloud **791.**

The computer system **700** may include the power electronic controller board **710** and may include the fluid valving device **720,** each of the controller **710** and the device **720** may be part of the computer and control system **700** and/or connected to the computer system **700** by means of digital and analogue transmission and receiving of electrical voltage/ power and/or electromagnetics signals and/or optical signals. The connections between the internal elements of the computer **700** system **780,710,720** may be done via wireless RF and/or wireless free optics and/or by cable means such as fiber optics and/or metallic wires.

In some embodiments of the present disclosure a moving platform **650** may include one or more fluid thrust vectoring unit (FTVU) **100** and an additional one or more Electrical vectoring thrust system (ETVS) **801** powered by an electrical grid **740.** The electrical grid **740** is part of the computer system **700** and managed by the thruster control system software **780.** The power electronics controller **710,** part of the computer unit **700** may power, manage and control the attached fluid thrust vectoring unit (FTVU) **100** and/or the thrust system (ETVS) **801** attached to the moving platform **650.**

In some embodiments of the present disclosure a moving platform **650** may include one or more fluid thrust vectoring unit **100** and an additional one or more Electrical vectoring thrust system (ETVS) **801.** In some cases, and during the moving platform **650** mission **800,** the Electrical vectoring thrust system (ETVS) **801** may autorun and self-generate an electrical power by the forced air mass flow **580** entering the electrical vector thrust system (ETVS) **801.** The electrical power generated by the thrust system (ETVS) **801** is damped into the electrical grid **740** and may be stored on a battery unit **470** part of the powerplant **400.**

In other cases, one or more computer units/systems **700** may generate electrical power using the fluid generator, where the self-generated electrical power may be used by the power electronics board **710.** As shown for example in **FIG.3** the fluid electrical generator **745** is attached to the actuator **200.** This electrical generator **745** may be part of the power plant **400** and/or in-line on the fluid powertrain **300** and/or part of the fluid power thrust vectoring unit (FTVU) **100.**

Additionally, or alternatively, the mechanical electrical power generator **745** may be attached to the fluid thrust vectoring unit (FTVU) **100** mainframe **110** and self- generate its electrical power/energy in Joules, Watts and/or kWh. The mechanical generator **745** may generate its power from the mechanical motion of the fluid rotary actuator **200** and/or from the energized working fluid 401 and/or from the air mass flow **580,585,590,595** passing through the thrust vectoring unit (FTVU) **100.**

Thus, according to the present disclosure, the computer system **700** is comprised from thruster controller software **780,** power electronics system **710** and a fluid valving device **720.** Hence, the computer system **700** is also connected to set of sensors as follows: the sensors **760** and **765** are measuring the valving device **720** performances and/or the working fluid **320** entering and leaving the valving device **720.** Similar, the sensors **771,775** and **779** are sensing and measuring the thrust vectoring unit (FTVU) **100** performances by providing information calculated and compute the thrust vector **170** size **175** and angle **179** using air mass physical datum **580,585,590,595** and/or by measuring working fluid **320** total entropy enters and leaves the actuator **200** and/or by measuring the motion of the thrust vectoring unit (FTVU) **100.**

Alternatively, as in configurations illustrated schematically in **FIG.3****,** the sensor set **781,785** and **789** may measure the motion and position for navigation purposes of the thrust vectoring unit (FTVU) **100** and/or may measure the 6DOF information for applications purposes **800.** Additionally, or alternatively, the remote sensor **799** may provide the moving platform **650** and/or the application **800** and/or the thrust vectoring unit (FTVU) **100** with measurable information of a remote location and/or the space around the thrust vectoring unit (FTVU) **100** and/or measurable information of the air mass around and/or far from the thrust vectoring unit (FTVU) **100.**

The real-time software **780** and the computer hardware **700** may comprise different layers of software and hardware attached to the moving platform **650** and/or the fluid thrust vectoring unit (FTVU) **100.** The software **780** may operate in a closed loop algorithm and/or open loop algorithm under a fast-real-time clock (RTC) **707.** Hence, the real-time clock **707,** part of the computer system **700** provides the instant torque **210** generated by the rotary actuator **200** with a time keeping **777** with high sampling rate, higher by 10k samples per second, while the rotational speed **190** of the actuator **200** is below say 10k RPM. In some cases, the computer hardware **700** attached to the actuator **200** may tick and clock **707** at a rate of 100kHz reaching up to 10'0 of GHz using means of time keeping such as temperature-controlled crystals, optical and/or radioactive oscillators.

Thus, according to the present disclosure, the computer software **780** (programming and algorithm) is part of the computer system **700** and may receive physical data from the moving platform **650** and/or fluid thrust vectoring unit (FTVU) **100** by the attached sensors and/or remote sensors **799** using remote communication means **795** and/or internal and external communication and power electronics cables **705** and **715.** This may include Radio Frequency (RF) communication between parts, elements and layers of the computer system **700** of the moving platform **650** and/or thrust vectoring unit (FTVU) **100.**

In some embodiments of the present disclosure the computer system **700** may operate in a cloud computing manner **791,** and allow on-demand availability of computer power, storage and resources with computer functionally connected to distributed sensors **760,765 ,771,775,779,781,785,789** and/or distributed of power electronics board **710,** and/or distributed fluid valving devices **720** and/or distributed remote components such as **791,795,799** over multiple locations, each location being a data center, server, embedded hardware and/or selfmanaged computer units **700** in all sizes, types and shapes. This distributed cloud computing network **700** may provide one or more moving platforms **650** and/or one or more fluid power thrust vectoring unit (FTVU) **100** to operate and act in real-time and in a flock configuration while undertaking flock mission **800** over time, space, and unique geometrical configuration. For example, the computer system **700** on the moving platform **650** may act and manage one or more fluid vectoring thrust units **100** in a cloud distributed manner **791** using remote information from **799,795,791.** Similarly, number of moving platforms **650** may undertake a flock mission **800** where each computer system **700** on each moving platform communicates **795** and acts with any thrust vectoring unit (FTVU) **100,** a part of the moving platforms **650** flock.

In some embodiments, as illustrated in **FIG.6B****,** one or more pumps/ compressors **440** are connected **441,442,443** to an engine/motor **430.** In some cases, but not limited to current innovation the pumps/ compressors **440** may comprise a variable displacement pump **440** controlled by a valving device **720** and/or controlled directly by the computer **700** power electronics board **710.** Each pump **441,442,443** may communicate with the electronics board **720** using signals **711,719** and fluid information in a similar manner to the valving device **720** methods of operations. In some cases, the servo- solenoid controlled mechanism within the pump **440** mechanical setup may comprise a swashplate and/or internal electro-mechanical actuator which is controlled by signals **719, 711** and by doing so may manage the working fluid **320** entering the pump **440** and the working fluids leaving the pump **440.**

Referring again to the non-limiting embodiment illustrated in **FIG.6A****,** one or more pumps **441,442,443** may be connected with network of fluid pipes **330** and other cabling **740,715,705** and communication means **799,795,791** as illustrated in **FIG.6A** by line **640** to one or more rotary actuators **200** in a direct manner and/or in a parallel manner and/or in serial manner. Hence, each pump **441,442,443** may power one or more thrust vectoring unit (FTVU) **100** and/or any combination of moving platforms **650** and/or any platform configurations **600.** For example, the computer system **700** may generate by its real-time software **780** number of controlled signals **719,711** and/or the computer system **700** may generate a different signal **711,719,** where there is a signal for each pump **441,442,443** in an independent manner. These signals **719,711** may change the pump **440** swashplate angle and/or the displacement volume and/or pressure while useful mechanical work **460** is done on the pump **440** by the engine/ motor **430.** This allows each pump **441,442,443** to be connected independently to a rotary actuator **200** and/or to an array of actuators **200.** This platform configuration **600** may power each thrust vectoring unit (FTVU) **100** only by displacement changes of each pump **440** by the computer system **700** real-time software **780.**

Referring again to the non-limiting embodiment illustrated in **FIG.6B****,** in some platform configurations **670,680,690,** the energized working fluid **320** may be generated by internal pump **440** and/or unknown generation methods **680** of energized working fluid **320,** part of a remote platform configuration **670,680,690.** In some cases, the platform configuration **690** may provide only useful mechanical work **460** to one or more moving platforms **650** and/or to one or more thrust vectoring units (FTVU) **100** by activating one or more pumps **440.**

In other cases, as referring to **FIG.6B****,** the platform configuration **680** may comprise an unknown powerplant **400** and a powertrain **640** connected to one or more rotary actuators **200** attached with wings **630** and/or control surfaces **620** and/or managing attached robotics application **800.**

The term "platform application" **800** may include, but not limited to any physical useful work on an object **820** and/or any physical interaction with the object **820.** The object **820** may be in a form of mass and/or may have a force and/or may have a momentum and/or may have a center of gravity, second moment of area and/or moment of inertia. In some applications **800,** the object **820** may be a mass with black body radiation and/or an object **820** that emits radiation and/or an object **820** that absorbs radiation. Additionally, or alternatively, the thrust vectoring unit (FTVU) **100** is attached directly with the object **820** in other cases the thrust vectoring unit (FTVU) **100** is remote to the object **820.**

In some embodiments of the present invention, the platform configuration **100, 650, 670,680,690** and **600** may comprise the payload **615** and/or an application payload **820** and/or power tool **815** and robotic apparatus **815.** Each platform configuration **100, 650, 670,680,690,600** and/or any combination between these platform configurations may provide a particular application **800** which powered by one or more thrust vectoring unit (FTVU) **100.**

In some cases, the application **800** may provide torque and/or polar friction between **815** and **820,** in other cases the application **800** may provide friction and/or any type of force and/or momentum between **815** and **820.** Additionally, or alternatively, the application **800** may provide communication means and/or vision means between **815** and **820.** The application **800** may provide a thermodynamics environment between **815** and **820,** by changing temperature, fluid entropy and/or volume and pressure between **815** and **820.** Hence, the platform configuration may keep stabilization and /or other methods of control systems in order to accomplish the interaction between **815** and **820** and/or between **650** and **615.**

In some embodiments of the present disclosure, the sensory and devices of the platform configuration **100, 600, 650, 670, 680 ,690** may comprise optical sensors, camera system, image sensors, vision machine and/or remote sensing sensors which includes fast and parallel computer hardware **700** such as FPGA, GPU, ARM and/or embedded hardware. The application **800** may comprise a robotic arm, cargo loading as a payload and/or passenger transport.

## Claims

1. A thrusting assembly configured for mounting on an aerial platform for generating thrusting power, the thrusting assembly comprising:
one or more fluid-based rotary actuators in fluid communication with a source of energized working fluid for receiving energized working fluid to thereby driving the one or more fluid-based rotary actuators;
one or more actuator disc arrangements, each of said one or more actuator disc arrangements comprising a plurality of blades rotatable by kinetic energy delivered by said one or more fluid-based rotary actuators; each of the one or more actuator disc arrangements being coupled to a respective one of said one or more fluid-based rotary actuators by a rotor shaft, such that rotation of said one or more actuator disc arrangements provides air mass flow through the one or more actuator disc arrangements and causes acceleration or maneuver of the aerial platform;
a valving mechanism disposed along a flow path between the source of energized working fluid and the one or more fluid-based rotary actuators;
an angular position sensor configured for sensing the angular position of the rotor shaft and generate angular position data based thereon;
at least one processing circuitry; one or more memories coupled to the at least one processing circuitry and storing programming instructions for execution by the at least one processing circuitry to control said valving mechanism to result in the following:
a selected rotation profile of said one or more actuator disc arrangements, based on the angular position data of the rotor shaft, said selected rotational profile of said one or more actuator disc arrangements comprising a varying angular acceleration in a single rotation or in a selected number of rotations, while maintaining a selected revolution per minute (RPM) in said single rotation or in said selected number of rotations, such that in part of the single rotation or of the selected number of rotations the blades are accelerating and in part of the single rotation or of the selected number of rotations the blade are decelerating such that the total time of the single rotation or of the selected number of rotations is according to a given and desired RPM; and
at least one of: (i) selected flow rate, (ii) selected fluid pressure, and (iii) selected temperature of said energized working fluid in said one or more fluid-based rotary actuators or being received in said one or more fluid-based rotary actuators.

2. The thrusting assembly of claim 1, **characterized by** at least one of the following:
the plurality of blades are coupled to a respective rotor by a hinge, wherein the angle of attack of the plurality of blades is defined by the forces acting on the hinge;
said processing circuitry is configured to control said source of energized working fluid, directly or indirectly, to affect the fluid pressure being output therefrom;
said processing circuitry is configured to control the rotational velocity of said blades and the angle of attack of each blade;
said processing circuitry is configured to control said valving mechanism by a pulse-width modulation technique;
said processing circuitry is configured to control the valving mechanism to allow a controlled maneuvering of the aerial platform in at least six degrees of freedom;
said processing circuitry is configured to control said valving mechanism to control the angular position, velocity and acceleration of the one or more fluid-based rotary actuators, or at least the rotary shaft rotatable by the one or more fluid-based rotary actuators, to thereby control mechanical motion of the one or more actuator disc arrangements.

3. The thrusting assembly of claim 1 or 2, **characterized by** one of the following:
said energized working fluid is liquid and said one or more fluid-based rotary actuators are hydraulic motors;
said energized working fluid is gas and said one or more fluid-based rotary actuators are pneumatic motors.

4. The thrusting assembly of any one of the preceding claims, wherein said energized working fluid is liquid and said one or more fluid-based rotary actuators are hydraulic motors, said liquid flowing in a closed-loop flow.

5. The thrusting assembly of any one of the preceding claims, wherein said energized working fluid is gas and said one or more fluid-based rotary actuators are pneumatic motors, said gas being air and said one or more fluid-based rotary actuators operating based on an open-loop flow of said gas.

6. The thrusting assembly of any one of the preceding claims, wherein said processing circuitry is configured to control the rotational velocity of said blades and the angle of attack of each blade, the processing circuitry being configured to control the angle of attack of each blade independently.

7. The thrusting assembly of any one of the preceding claims, comprising a tilt sensor for sensing a tilt of the aerial platform and generating tilt data based thereon, wherein said processing circuitry is configured to control said valving mechanism based on said tilt data.

8. The thrusting assembly of any one of the preceding claims, comprising said source of energized working fluid, being **characterized by** at least one of the following:
said source of energized fluid comprises at least two sub-sources of energized working fluid, each is configured to provide an energized working fluid in a different pressure to allow feed of the one or more fluid-based rotary actuators with a range of pressures of the fluid;
said source of energized working fluid comprises one or more liquid pumps;
said source of energized working fluid comprises one or more compressors.

9. The thrusting assembly of any one of the preceding claims, comprising a cooling arrangement in fluid communication with said source of energized working fluid for cooling the energized working fluid.

10. The thrusting assembly of any one of the preceding claims, comprising a power source for powering said source of energized working fluid.

11. The thrusting assembly of any one of the preceding claims, wherein each of said one or more fluid-based rotary actuators comprises a rotatable motor shaft coupled to a respective actuator disc arrangement of said one or more actuator disc arrangements for allowing rotation of the respective rotor;
wherein the thrusting assembly further comprises a motor shaft angular position sensor configured for sensing the angular position of the motor shaft and generate motor angular position data based thereon;
wherein said processing circuitry is configured to allow controlling of the motor shaft rotation profile based on the motor angular position data.

12. The thrusting assembly of any one of the preceding claims, wherein said one or more fluid-based rotary actuators are operable to result in air mass flow through the thrusting assembly in two opposite directions.

13. The thrusting assembly of claim 12, wherein said processing circuitry is configured to control said valving mechanism to controllably result said air mass flow through the thrusting assembly in two opposite directions.

14. The thrusting assembly of any one of the preceding claims, comprising a combustion component configured to heat air mass flow that flows from the one or more actuator disc arrangements to thereby further accelerating the air mass flow.

15. The thrusting assembly of claim 14, wherein said combustion component comprises a nozzle, wherein the air mass flow is heated to thereby accelerate within said nozzle.

16. The thrusting assembly of any one of the preceding claims, wherein said aerial platform is an autonomous aerial platform.

17. The thrusting assembly of any one of the preceding claims, **characterized by** at least one of the following:
propulsive force of the thrusting assembly comprises a disc loading profile controlled by at least one characterization of said one or more actuator disc arrangements: an instant torque, instant angular torque, alternate instant angular torque, instant rotational speed, global rotational speed, or any combination thereof;
the thrusting assembly is configured to generate autorotation energy in response to autorotation of the one or more fluid-based rotary actuators;
said one or more actuator disc arrangements comprise one or more tandem actuator disc arrangements, each has a pair of coaxial actuator disc arrangements members.

18. The thrusting assembly of any one of the preceding claims, wherein the thrusting assembly is configured to generate autorotation energy in response to autorotation of the one or more fluid-based rotary actuators, said autorotation energy either being directly used to drive said one or more fluid-based rotary actuators or stored in an energy storage of the thrusting assembly.

19. The thrusting assembly of any one of the preceding claims, wherein said one or more actuator disc arrangements comprise one or more tandem actuator disc arrangements, each having a pair of coaxial actuator disc arrangements members, and is **characterized by** at least one of the following: (i) comprising an odd number of said one or more tandem actuator disc arrangements; and (ii) each member of the pair of coaxial actuator disc arrangements is configured to rotate in an opposite direction to the other member.

20. An aerial platform, comprising:
the thrusting assembly of any one of claims 1-9;
platform mission and application utility configured to operate a desired operation while the aerial platform is airborne.

21. The aerial platform of claim 20, wherein the platform mission and application utility is driven by the energized working fluid supplied from the source of energized working fluid.

## Patentansprüche

1. Schubanordnung, welche dazu eingerichtet ist, zum Erzeugen einer Schubleistung an einer Arbeitsbühne montiert zu sein, wobei die Schubanordnung umfasst:
einen oder mehrere fluidbasierte rotierende Aktuatoren, welche zum Empfangen eines angeregten Arbeitsfluids in Fluidverbindung mit einer Quelle des angeregten Arbeitsfluids sind, um dadurch den einen oder die mehreren fluidbasierten rotierenden Aktuatoren anzutreiben;
eine oder mehrere Aktuator-Scheibenanordnungen, wobei jede der einen oder der mehreren Aktuator-Scheibenanordnungen eine Mehrzahl von Schaufeln umfasst, welche durch kinetische Energie rotierbar sind, welche von dem einen oder den mehreren fluidbasierten rotierenden Aktuatoren geliefert wird; wobei jede der einen oder der mehreren Aktuator-Scheibenanordnungen durch einen Rotorschaft mit einem jeweiligen aus dem einen oder den mehreren fluidbasierten rotierenden Aktuatoren gekoppelt ist, so dass die Rotation der einen oder der mehreren Aktuator-Scheibenanordnungen durch die eine oder die mehreren Aktuator-Scheibenanordnungen einen Luftmassestrom bereitstellt und eine Beschleunigung oder ein Manöver der Arbeitsbühne bewirkt;
einen Ventilmechanismus, welcher entlang eines Strömungspfads zwischen der Quelle des angeregten Arbeitsfluids und dem einen oder den mehreren fluidbasierten rotierenden Aktuatoren angeordnet ist;
einen Winkelpositionssensor, welcher dazu eingerichtet ist, die Winkelposition des Rotorschafts zu erfassen und darauf basierend Winkelpositionsdaten zu erzeugen;
wenigstens eine Verarbeitungsschaltung; einen oder mehrere Speicher, welche mit der wenigstens einen Verarbeitungsschaltung gekoppelt sind und Programmierungsanweisungen zum Ausführen durch die wenigstens eine Verarbeitungsschaltung speichern, um den Ventilmechanismus derart zu steuern, um folgendes zu erreichen:
ein ausgewähltes Rotationsprofil der einen oder der mehreren Aktuator-Scheibenanordnungen auf Grundlage der Winkelpositionsdaten des Rotorschafts, wobei das ausgewählte Rotationsprofil der einen oder der mehreren Aktuator-Scheibenanordnungen eine variierende Winkelbeschleunigung bei einer einzelnen Rotation oder bei einer ausgewählten Anzahl an Rotationen umfasst, während eine ausgewählte Umdrehung pro Minute (RPM) bei der einzelnen Rotation oder bei der ausgewählten Anzahl an Rotationen beibehalten wird, so dass die Schaufeln bei einem Teil der einzelnen Rotation oder der ausgewählten Anzahl an Rotationen beschleunigen und sich bei einem Teil der einzelnen Rotation oder der ausgewählten Anzahl an Rotationen verlangsamen, so dass die Gesamtzeit der einzelnen Rotation oder der ausgewählten Anzahl an Rotationen gemäß einem vorgegebenen und erwünschten RPM ist; und
wenigstens eines aus: (i) einer ausgewählten Strömungsrate, (ii) einem ausgewählten Fluiddruck und (iii) einer ausgewählten Temperatur des angeregten Arbeitsfluids in dem einen oder den mehreren fluidbasierten rotierenden Aktuatoren oder aufgenommen in dem einen oder den mehreren fluidbasierten rotierenden Aktuatoren.

2. Schubanordnung nach Anspruch 1, **gekennzeichnet durch** wenigstens eines der folgenden:
die Mehrzahl von Schaufeln sind mit einem jeweiligen Rotor durch ein Gelenk gekoppelt, wobei der Angriffswinkel der Mehrzahl von Schaufeln durch die Kräfte definiert ist, welche auf das Gelenk wirken;
die Verarbeitungsschaltung ist dazu eingerichtet, die Quelle des angeregten Arbeitsfluids direkt oder indirekt zu steuern, um den Fluiddruck zu beeinflussen, welcher davon ausgegeben wird;
die Verarbeitungsschaltung ist dazu eingerichtet, die Rotationsgeschwindigkeit der Schaufeln und den Angriffswinkel jeder Schaufel zu steuern;
die Verarbeitungsschaltung ist dazu eingerichtet, den Ventilmechanismus durch ein Pulsweitenmodulationsverfahren zu steuern;
die Verarbeitungsschaltung ist dazu eingerichtet, den Ventilmechanismus zu steuern, um ein gesteuertes Manövrieren der Arbeitsbühne mit wenigstens sechs Freiheitsgraden zu ermöglichen;
die Verarbeitungsschaltung ist dazu eingerichtet, den Ventilmechanismus zu steuern, um die Winkelposition, Geschwindigkeit und Beschleunigung des einen oder der mehreren fluidbasierten rotierenden Aktuatoren oder wenigstens den rotierenden Schaft zu steuern, welcher durch den einen oder die mehreren fluidbasierten rotierenden Aktuatoren rotierbar ist, um dadurch eine mechanische Bewegung der einen oder der mehreren Aktuator-Scheibenanordnungen zu steuern.

3. Schubanordnung nach Anspruch 1 oder 2, **gekennzeichnet durch** wenigstens eines der folgenden:
das angeregte Arbeitsfluid ist flüssig und der eine oder die mehreren fluidbasierten rotierenden Aktuatoren sind hydraulische Motoren;
das angeregte Arbeitsfluid ist ein Gas und der eine oder die mehreren fluidbasierten rotierenden Aktuatoren sind pneumatische Motoren.

4. Schubanordnung nach einem der vorhergehenden Ansprüche, wobei das angeregte Arbeitsfluid flüssig ist und der eine oder die mehreren fluidbasierten rotierenden Aktuatoren hydraulische Motoren sind, wobei die Flüssigkeit in einem geschlossenen Kreislauf strömt.

5. Schubanordnung nach einem der vorhergehenden Ansprüche, wobei das angeregte Arbeitsfluid ein Gas ist und der eine oder die mehreren fluidbasierten rotierenden Aktuatoren pneumatische Motoren sind, wobei das Gas Luft ist und der eine oder die mehreren fluidbasierten rotierenden Aktuatoren auf Grundlage eines offenen Kreislauf-Stroms des Gases betrieben werden.

6. Schubanordnung nach einem der vorhergehenden Ansprüche, wobei die Verarbeitungsschaltung dazu eingerichtet ist, die Rotationsgeschwindigkeit der Schaufeln und den Angriffswinkel jeder Schaufel zu steuern, und wobei die Verarbeitungsschaltung dazu eingerichtet ist, den Angriffswinkel jeder Schaufel unabhängig zu steuern.

7. Schubanordnung nach einem der vorhergehenden Ansprüche, umfassend einen Neigungssensor zum Erfassen einer Neigung der Arbeitsbühne und zum Erzeugen darauf basierter Neigungsdaten, wobei die Verarbeitungsschaltung dazu eingerichtet ist, den Ventilmechanismus auf Grundlage der Neigungsdaten zu steuern.

8. Schubanordnung nach einem der vorhergehenden Ansprüche, umfassend die Quelle des angeregten Arbeitsfluids, welche **gekennzeichnet ist durch** wenigstens eines aus den folgenden:
die Quelle des angeregten Arbeitsfluids umfasst wenigstens zwei Teilquellen des angeregten Arbeitsfluids, welche jeweils dazu eingerichtet sind, ein angeregtes Arbeitsfluid mit einem unterschiedlichen Druck bereitzustellen, um ein Einspeisen des einen oder der mehreren fluidbasierten rotierenden Aktuatoren mit einem Bereich an Fluiddrücken zu ermöglichen;
die Quelle des angeregten Arbeitsfluids umfasst eine oder mehrere Flüssigkeitspumpen;
die Quelle des angeregten Arbeitsfluids umfasst einen oder mehrere Kompressoren.

9. Schubanordnung nach einem der vorhergehenden Ansprüche, umfassend eine Kühlanordnung in Fluidverbindung mit der Quelle des angeregten Arbeitsfluids zum Kühlen des angeregten Arbeitsfluids.

10. Schubanordnung nach einem der vorhergehenden Ansprüche, umfassend eine Energiequelle zur Energieversorgung der Quelle des angeregten Arbeitsfluids.

11. Schubanordnung nach einem der vorhergehenden Ansprüche, wobei jeder aus dem einen oder den mehreren fluidbasierten rotierenden Aktuatoren einen rotierbaren Motorschaft umfasst, welcher mit einer jeweiligen Aktuator-Scheibenanordnung aus der einen oder der mehreren Aktuator-Scheibenanordnungen gekoppelt ist, um eine Rotation des jeweiligen Rotors zu ermöglichen;
wobei die Schubanordnung ferner einen Motorschaft-Winkelpositionssensor umfasst, welcher dazu eingerichtet ist, die Winkelposition des Motorschafts zu erfassen und darauf basierend Motorwinkelpositionsdaten zu erzeugen;
wobei die Verarbeitungsschaltung dazu eingerichtet ist, ein Steuern des Motorschaft-Rotationsprofils auf Grundlage der Motorwinkelpositionsdaten zu ermöglichen.

12. Schubanordnung nach einem der vorhergehenden Ansprüche, wobei der eine oder die mehreren fluidbasierten rotierenden Aktuatoren derart betreibbar sind, dass durch die Schubanordnung in zwei entgegengesetzten Richtungen ein Luftmassestrom entsteht.

13. Schubanordnung nach Anspruch 12, wobei die Verarbeitungsschaltung dazu eingerichtet ist, den Ventilmechanismus derart zu steuern, dass der Luftmassestrom steuerbar durch die Schubanordnung in zwei entgegengesetzten Richtungen entsteht.

14. Schubanordnung nach einem der vorhergehenden Ansprüche, umfassend eine Verbrennungskomponente, welche dazu eingerichtet ist, einen Luftmassestrom zu erwärmen, welcher von der einen oder den mehreren Aktuator-Scheibenanordnungen strömt, um dadurch den Luftmassestrom weiter zu beschleunigen.

15. Schubanordnung nach Anspruch 14, wobei die Verbrennungskomponente eine Düse umfasst, wobei der Luftmassestrom erwärmt wird, um dadurch innerhalb der Düse zu beschleunigen.

16. Schubanordnung nach einem der vorhergehenden Ansprüche, wobei die Arbeitsbühne eine autonome Arbeitsbühne ist.

17. Schubanordnung nach einem der vorhergehenden Ansprüche, **gekennzeichnet durch** wenigstens eines aus den folgenden:
eine Vortriebskraft der Schubanordnung umfasst ein Scheibenladeprofil, welches gesteuert wird durch wenigstens eine Kennzeichnung der einen oder den mehreren Aktuator-Scheibenanordnungen, aus: einem sofortigen Drehmoment, einem sofortigen Winkeldrehmoment, einem alternativen sofortigen Winkeldrehmoment, einer sofortigen Rotationsgeschwindigkeit, einer globalen Rotationsgeschwindigkeit oder einer jeglichen Kombination davon;
die Schubanordnung dazu eingerichtet ist, als Reaktion auf eine Autorotation des einen oder der mehreren fluidbasierten rotierenden Aktuatoren eine Autorotationsenergie zu erzeugen;
die eine oder die mehreren Aktuator-Scheibenanordnungen umfassend eine oder mehrere Tandem-Aktuator-Scheibenanordnungen, welche jeweils ein Paar koaxialer Aktuator-Scheibenanordnungselemente aufweisen.

18. Schubanordnung nach einem der vorhergehenden Ansprüche, wobei die Schubanordnung dazu eingerichtet ist, als Reaktion auf eine Autorotation des einen oder der mehreren fluidbasierten rotierenden Aktuatoren eine Autorotationsenergie zu erzeugen, wobei die Autorotationsenergie entweder direkt dazu verwendet wird, den einen oder die mehreren fluidbasierten rotierenden Aktuatoren anzutreiben, oder in einem Energiespeicher der Schubanordnung gespeichert wird.

19. Schubanordnung nach einem der vorhergehenden Ansprüche, wobei die eine oder die mehreren Aktuator-Scheibenanordnungen eine oder mehrere Tandem-Aktuator-Scheibenanordnungen umfassen, welche jeweils ein Paar koaxialer Aktuator-Scheibenanordnungselemente aufweisen, und durch wenigstens eines der folgenden gekennzeichnet sind: (i) umfassend eine ungerade Anzahl aus der einen oder den mehreren Tandem-Aktuator-Scheibenanordnungen; und (ii) jedes Element des Paars koaxialer Aktuator-Scheibenanordnungselemente ist dazu eingerichtet, in einer zu dem anderen Element entgegengesetzten Richtung zu rotieren.

20. Arbeitsbühne, umfassend:
eine Schubanordnung nach einem der Ansprüche 1-9;
einen Bühnenauftrag und Bühnen-Anwendungsbereich, eingerichtet zum Betreiben eines erwünschten Vorgangs, während die Arbeitsbühne in der Luft ist.

21. Arbeitsbühne nach Anspruch 20, wobei der Bühnenauftrag und Bühnen-Anwendungsbereich von dem angeregten Arbeitsfluid angetrieben wird, welches von der Quelle des angeregten Arbeitsfluids zugeführt wird.

## Revendications

1. Ensemble de poussée conçu pour être monté sur une plateforme aérienne pour générer une puissance de poussée, l'ensemble de poussée comprenant :
un ou plusieurs actionneurs rotatifs à base de fluide en communication fluidique avec une source de fluide de travail sous tension afin de recevoir un fluide de travail sous tension pour ainsi entraîner le ou les actionneurs rotatifs à base de fluide ;
un ou plusieurs agencements de disque d'actionneur, chacun desdits un ou plusieurs agencements de disque d'actionneur comprenant une pluralité de pales pouvant être entraînées en rotation par de l'énergie cinétique délivrée par lesdits un ou plusieurs actionneurs rotatifs à base de fluide ; chacun des un ou plusieurs agencements de disque d'actionneur étant accouplé à l'un respectif desdits un ou plusieurs actionneurs rotatifs à base de fluide par un arbre de rotor, de sorte que la rotation desdits un ou plusieurs agencements de disque d'actionneur fournisse un flux de masse d'air par l'intermédiaire des un ou plusieurs agencements de disque d'actionneur et provoque une accélération ou une manœuvre de la plateforme aérienne ;
un mécanisme de soupape disposé le long d'un trajet d'écoulement entre la source de fluide de travail sous tension et les un ou plusieurs actionneurs rotatifs à base de fluide ;
un capteur de position angulaire conçu pour détecter la position angulaire de l'arbre de rotor et générer des données de position angulaire sur la base de celle-ci ;
au moins un circuit de traitement ; une ou plusieurs mémoires couplées à l'au moins un circuit de traitement et stockant des instructions de programmation devant être exécutées par l'au moins un circuit de traitement pour commander ledit mécanisme de soupape pour obtenir ce qui suit :
un profil de rotation sélectionné desdits un ou plusieurs agencements de disque d'actionneur, sur la base des données de position angulaire de l'arbre de rotor, ledit profil de rotation sélectionné desdits un ou plusieurs agencements de disque d'actionneur comprenant une accélération angulaire variable dans une rotation unique ou dans un nombre de rotations sélectionné, tout en maintenant un régime (tr/min) sélectionné dans ladite rotation unique ou dans ledit nombre de rotations sélectionné, de sorte que dans une partie de la rotation unique ou du nombre de rotations sélectionné, les pales accélèrent, et dans une partie de la rotation unique ou du nombre de rotations sélectionné, les pales décélèrent de sorte que le temps total de la rotation unique ou du nombre de rotations sélectionné soit fonction d'un nombre de tr/min donné et souhaité ; et
au moins l'un des éléments suivants : (i) le débit sélectionné, (ii) la pression de fluide sélectionnée, et (iii) la température sélectionnée dudit fluide de travail sous tension dans lesdits un ou plusieurs actionneurs rotatifs à base de fluide ou reçu dans lesdits un ou plusieurs actionneurs rotatifs à base de fluide.

2. Ensemble de poussée selon la revendication 1, **caractérisé par** au moins l'un des éléments suivants :
la pluralité de pales est accouplée à un rotor respectif par une charnière, dans lequel l'angle d'attaque de la pluralité de pales est défini par les forces agissant sur la charnière ;
lesdits circuits de traitement sont conçus pour commander ladite source de fluide de travail sous tension, directement ou indirectement, pour affecter la pression de fluide en sortie de celle-ci ;
lesdits circuits de traitement sont conçus pour commander la vitesse de rotation desdites pales et l'angle d'attaque de chaque pale ;
lesdits circuits de traitement sont conçus pour commander ledit mécanisme de soupape par une technique de modulation en largeur d'impulsion ;
lesdits circuits de traitement sont conçus pour commander le mécanisme de soupape pour permettre une manœuvre commandée de la plateforme aérienne dans au moins six degrés de liberté ;
lesdits circuits de traitement sont conçus pour commander ledit mécanisme de soupape pour commander la position angulaire, la vitesse et l'accélération du ou des actionneurs rotatifs à base de fluide, ou au moins l'arbre rotatif pouvant être entraîné en rotation par les un ou plusieurs actionneurs rotatifs à base de fluide, pour ainsi commander le mouvement mécanique des un ou plusieurs agencements de disque d'actionneur.

3. Ensemble de poussée selon la revendication 1 ou 2, **caractérisé par** l'un des éléments suivants :
ledit fluide de travail sous tension est liquide et lesdits un ou plusieurs actionneurs rotatifs à base de fluide sont des moteurs hydrauliques ;
ledit fluide de travail sous tension est du gaz et lesdits un ou plusieurs actionneurs rotatifs à base de fluide sont des moteurs pneumatiques.

4. Ensemble de poussée selon l'une quelconque des revendications précédentes, dans lequel ledit fluide de travail sous tension est liquide et lesdits un ou plusieurs actionneurs rotatifs à base de fluide sont des moteurs hydrauliques, ledit liquide s'écoulant dans un flux en boucle fermée.

5. Ensemble de poussée selon l'une quelconque des revendications précédentes, dans lequel ledit fluide de travail sous tension est du gaz et lesdits un ou plusieurs actionneurs rotatifs à base de fluide sont des moteurs pneumatiques, ledit gaz étant de l'air et lesdits un ou plusieurs actionneurs rotatifs à base de fluide fonctionnant sur la base d'un flux en boucle ouverte dudit gaz.

6. Ensemble de poussée selon l'une quelconque des revendications précédentes, dans lequel lesdits circuits de traitement sont conçus pour commander la vitesse de rotation desdites pales et l'angle d'attaque de chaque pale, les circuits de traitement étant conçus pour commander l'angle d'attaque de chaque pale indépendamment.

7. Ensemble de poussée selon l'une quelconque des revendications précédentes, comprenant un capteur d'inclinaison permettant de détecter une inclinaison de la plateforme aérienne et de générer des données d'inclinaison sur la base de celle-ci, dans lequel lesdits circuits de traitement sont conçus pour commander ledit mécanisme de soupape sur la base desdites données d'inclinaison.

8. Ensemble de poussée selon l'une quelconque des revendications précédentes, comprenant ladite source de fluide de travail sous tension, **caractérisé par** au moins l'un des éléments suivants :
ladite source de fluide sous tension comprend au moins deux sous-sources de fluide de travail sous tension, chacune étant conçue pour fournir un fluide de travail sous tension à une pression différente pour permettre l'alimentation des un ou plusieurs actionneurs rotatifs à base de fluide avec une plage de pressions du fluide ;
ladite source de fluide de travail sous tension comprend une ou plusieurs pompes à liquide ;
ladite source de fluide de travail sous tension comprend un ou plusieurs compresseurs.

9. Ensemble de poussée selon l'une quelconque des revendications précédentes, comprenant un agencement de refroidissement en communication fluidique avec ladite source de fluide de travail sous tension afin de refroidir le fluide de travail sous tension.

10. Ensemble de poussée selon l'une quelconque des revendications précédentes, comprenant une source de puissance permettant d'alimenter ladite source de fluide de travail sous tension.

11. Ensemble de poussée selon l'une quelconque des revendications précédentes, dans lequel chacun desdits un ou plusieurs actionneurs rotatifs à base de fluide comprend un arbre de moteur rotatif accouplé à un agencement de disque d'actionneur respectif desdits un ou plusieurs agencements de disque d'actionneur afin de permettre la rotation du rotor respectif ;
dans lequel l'ensemble de poussée comprend en outre un capteur de position angulaire d'arbre de moteur conçu pour détecter la position angulaire de l'arbre de moteur et générer des données de position angulaire de moteur sur la base de celles-ci ;
dans lequel lesdits circuits de traitement sont conçus pour permettre la commande du profil de rotation d'arbre de moteur sur la base des données de position angulaire de moteur.

12. Ensemble de poussée selon l'une quelconque des revendications précédentes, dans lequel lesdits un ou plusieurs actionneurs rotatifs à base de fluide peuvent être utilisés pour obtenir un flux de masse d'air par l'intermédiaire de l'ensemble de poussée dans deux directions opposées.

13. Ensemble de poussée selon la revendication 12, dans lequel lesdits circuits de traitement sont conçus pour commander ledit mécanisme de soupape pour obtenir de manière contrôlable ledit flux de masse d'air par l'intermédiaire de l'ensemble de poussée dans deux directions opposées.

14. Ensemble de poussée selon l'une quelconque des revendications précédentes, comprenant un composant de combustion conçu pour chauffer le flux de masse d'air qui s'écoule depuis les un ou plusieurs agencements de disques d'actionneur pour ainsi accélérer davantage le flux de masse d'air.

15. Ensemble de poussée selon la revendication 14, dans lequel ledit composant de combustion comprend une buse, dans lequel le flux de masse d'air est chauffé pour ainsi accélérer à l'intérieur de ladite buse.

16. Ensemble de poussée selon l'une quelconque des revendications précédentes, dans lequel ladite plateforme aérienne est une plateforme aérienne autonome.

17. Ensemble de poussée selon l'une quelconque des revendications précédentes, **caractérisé par** au moins l'un des éléments suivants :
la force de propulsion de l'ensemble de poussée comprend un profil de charge de disque commandé par au moins une caractérisation desdits un ou plusieurs agencements de disques d'actionneur : un couple instantané, un couple angulaire instantané, un couple angulaire instantané alternatif, une vitesse de rotation instantanée, une vitesse de rotation globale, ou toute combinaison de ceux-ci ;
l'ensemble de poussée est conçu pour générer une énergie d'autorotation en réponse à l'autorotation des un ou plusieurs actionneurs rotatifs à base de fluide ;
lesdits un ou plusieurs agencements de disque d'actionneur comprennent un ou plusieurs agencements de disque d'actionneur en tandem, dont chacun présente une paire d'organes d'agencements de disque d'actionneur coaxiaux.

18. Ensemble de poussée selon l'une quelconque des revendications précédentes, dans lequel l'ensemble de poussée est conçu pour générer une énergie d'autorotation en réponse à l'autorotation des un ou plusieurs actionneurs rotatifs à base de fluide, ladite énergie d'autorotation étant soit directement utilisée pour entraîner lesdits un ou plusieurs actionneurs rotatifs à base de fluide, soit stockée dans un stockage d'énergie de l'ensemble de poussée.

19. Ensemble de poussée selon l'une quelconque des revendications précédentes, dans lequel lesdits un ou plusieurs agencements de disques d'actionneurs comprennent un ou plusieurs agencements de disques d'actionneurs en tandem, chacun présentant une paire d'organes d'agencements de disques d'actionneurs coaxiaux, et étant **caractérisé par** au moins l'un des éléments suivants : (i) l'inclusion d'un nombre impair desdits un ou plusieurs agencements de disque d'actionneur en tandem ; et (ii) chaque organe de la paire d'agencements de disques d'actionneur coaxiaux est conçu pour tourner dans une direction opposée à celle de l'autre organe.

20. Plateforme aérienne, comprenant :
l'ensemble de poussée selon l'une quelconque des revendications 1 à 9 ;
un élément de mission et d'application de plateforme conçu pour réaliser une opération souhaitée pendant que la plateforme aérienne est aéroportée.

21. Plateforme aérienne selon la revendication 20, dans laquelle l'élément de mission et d'application de plateforme est entraîné par le fluide de travail sous tension fourni par la source de fluide de travail sous tension.
